# EUROPEAN PATENT SPECIFICATION

(11) **EP 3 255 121 B1**
(45) Date of publication and mention of the grant of the patent: **20.02.2019**
(21) Application number: 16746443.7
(22) Date of filing: 25.01.2016
(51) Int. Cl.: C09K 21/12, C08K 3/22, C08K 5/3462, C08K 5/3492, C08K 5/5435, C08L 23/00, C08L 101/00, C09K 21/10, C09K 21/14

(54) **FLAME-RETARDANT COMPOSITION AND FLAME-RETARDANT SYNTHETIC RESIN COMPOSITION**
FLAMMHEMMENDE ZUSAMMENSETZUNG UND FLAMMHEMMENDE KUNSTHARZZUSAMMENSETZUNG
COMPOSITION D'AGENT IGNIFUGE, COMPOSITION DE RÉSINE SYNTHÉTIQUE IGNIFUGE

(30) Priority: 06.02.2015 JP 2015022213; 06.02.2015 JP 2015022214
(43) Date of publication of application: 13.12.2017
(73) Proprietor: Adeka Corporation, Tokyo 116-8554 (JP)
(72) Inventor: KAMIMOTO, Tetsuo, Saitama-shi Saitama 336-0022 (JP); ISHIKAWA, Shinichi, Saitama-shi Saitama 336-0022 (JP); YONEZAWA, Yutaka, Saitama-shi Saitama 336-0022 (JP); ASAI, Kei, Saitama-shi Saitama 336-0022 (JP)
(74) Representative: Forstmeyer, Dietmar
(86) International application number: PCT/JP2016/051985
(87) International publication number: WO 2016/125612

(56) References cited:
- EP-A1- 1 277 794
- EP-A1- 1 516 907
- EP-A1- 1 719 800
- EP-A1- 2 210 914
- EP-A1- 2 789 653
- WO-A1-2004/000973
- JP-A- 2008 208 269
- JP-A- 2014 012 704

## Description

### Technical Field

The present invention relates to a flame retardant composition for synthetic resins, and a flame-retardant synthetic resin composition including the flame retardant composition. More specifically, the present invention relates to a flame retardant composition that has excellent handleability with minimal rise-up of powder and excellent storage stability without causing caking etc., and a flame-retardant synthetic resin composition that includes the flame retardant composition.

### Background Art

Synthetic resins have conventionally been widely used, for example, for construction materials, automobile parts, packaging materials, agricultural materials, housing materials for home appliances, and toys because of their excellent chemical and mechanical characteristics. However, many synthetic resins are flammable and thus need flame-proofing for some applications. A widely known flame-proofing method is to use one or a combination of flame retardants, such as halogen flame retardants, inorganic phosphorus flame retardants typified by red phosphorus and polyphosphate flame retardants such as ammonium polyphosphate, organophosphorus flame retardants typified by triaryl phosphate ester compounds, and metal hydroxides, and flame-retardant aids such as antimony oxide and melamine compounds.

Particularly, flame retardants known to have excellent flame retardancy include intumescent flame retardants, which include as a main component a salt between polyphosphoric acid or pyrophosphoric acid and a nitrogen-containing compound and form a surface-swelling (intumescent) layer on combustion to prevent the diffusion of decomposition products and the transfer of heat, thus achieving flame retardancy. For example, US 2003/088000 A1 (Patent Literature 1) discloses such a flame retardant.

Further, there have been made various proposals with a view to improving powder characteristics and processability of such intumescent flame retardants and also improving the physical properties of resin when an intumescent flame retardant is blended thereto, such as the addition of an ester of a higher aliphatic carboxylic acid, and the addition of a silicone oil or a silane coupling agent (Patent Literatures 2 to 4).

These conventional intumescent flame retardants have the following various drawbacks: handleability has not yet been sufficiently improved (for example, powder rises up at the time of use); and even in cases where the problem of rise-up of powder is resolved, storage stability is poor (specifically, caking etc. occurs during storage) and flame retardancy may be also affected. Thus, there is a need for a flame retardant having excellent handleability with minimal rise-up of powder, excellent storage stability without causing caking etc., and excellent flame retardancy.

### Citation List

### Patent Literature

Patent Literature 1: US 2003/088000 A1
Patent Literature 2: US 2005/0256234 A1
Patent Literature 3: US 2007/0176154 A1
Patent Literature 4: JP 2008-208269 A

Additionally, document EP 2 210 914 discloses flame retardant compositions comprising melamine pyrophosphate, piperazine pyrophosphate and a carboxylic acid ester.

### Summary of Invention

### Technical Problem

Thus, an objective of the invention is to provide a flame-retardant composition having excellent handleability with minimal rise-up of powder and excellent storage stability without causing caking etc., and to provide a flame-retardant synthetic resin composition that includes this flame retardant composition and has excellent flame retardancy.

### Solution to Problem

Inventors have arrived at the present invention as a result of diligent research to solve the aforementioned problems.

The present invention provides, as the first invention, a flame retardant composition including 20 to 50 parts by mass of component (A), 50 to 80 parts by mass of component (B) (with the proviso that the total of component (A) and component (B) is 100 parts by mass), 0.01 to 5.0 parts by mass of component (C), and 0.01 to 1.0 part by mass of component (D):
component (A): at least one melamine salt selected from the group consisting of melamine orthophosphate, melamine pyrophosphate, and melamine polyphosphate;
component (B): at least one piperazine salt selected from the group consisting of piperazine orthophosphate, piperazine pyrophosphate, and piperazine polyphosphate;
component (C): a silane coupling agent; and
component (D): an aliphatic dicarboxylic acid ether ester compound represented by general formula (1) below: 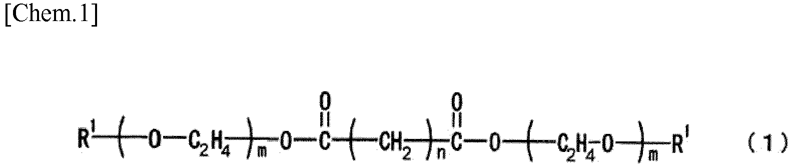
wherein n represents an integer from 2 to 6, m represents an integer from 1 to 3, and R¹ represents a C₁₋₆ alkyl group.

The present invention also provides, as a preferred embodiment of the first invention, a flame retardant composition wherein the aforementioned component (C) is an epoxy-group-containing silane coupling agent.

The present invention also provides, as the second invention, a flame retardant composition including 20 to 50 parts by mass of component (A), 50 to 80 parts by mass of component (B) (with the proviso that the total of component (A) and component (B) is 100 parts by mass), and 0.01 to 1.0 part by mass of component (E):
component (A): at least one melamine salt selected from the group consisting of melamine orthophosphate, melamine pyrophosphate, and melamine polyphosphate;
component (B): at least one piperazine salt selected from the group consisting of piperazine orthophosphate, piperazine pyrophosphate, and piperazine polyphosphate; and
component (E): an aliphatic carboxylic acid ester compound represented by general formula (2) below: 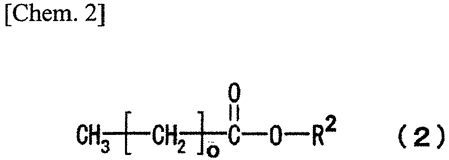
wherein o represents an integer from 10 to 20, and R² represents a C₁₋₈ alkyl group.

The present invention also provides, as a preferred embodiment of the second invention, the flame retardant composition further including 0.01 to 10 parts by mass of a silicone oil as component (F).

The present invention also provides, as a preferred embodiment of the first and second inventions, the flame retardant composition further including 0.01 to 10 parts by mass of zinc oxide as component (G).

The present invention also provides, as the third invention, a flame-retardant synthetic resin composition including: a synthetic resin; and the aforementioned flame retardant composition of the first or second invention.

The present invention also provides, as a preferred embodiment of the third invention, the flame-retardant synthetic resin composition wherein the synthetic resin is a polyolefin resin.

The present invention also provides, as the fourth invention, a molded article obtained from the aforementioned flame-retardant synthetic resin composition.

### Advantageous Effects of Invention

According to the present invention, it is possible to provide a flame retardant composition that has excellent handleability with minimal rise-up of powder and excellent storage stability without causing caking etc., and is capable of imparting excellent flame retardancy to synthetic resin. According to the present invention, it is also possible to provide a flame-retardant synthetic resin composition having excellent flame retardancy. According to the present invention, it is also possible to provide a molded article having flame retardancy.

### Description of Embodiments

The invention will be described below by way of preferred embodiments.

The first and second inventions relate to flame retardant compositions. In the first and second inventions, the term "flame-retardant" means having resistance to ignition, being ignitable but allowing only a very low speed of flame spread, or being ignitable but self-distinguishing and, more preferably, means that the substance is at least rated V-2 among the combustion ranks according to the UL-94V standard described in the Examples. A "flame retardant composition" refers to a composition including at least one flame retardant.

First, the first invention will be described.

A melamine salt used as component (A) in the flame retardant composition of the first invention is selected from the group consisting of melamine orthophosphate, melamine pyrophosphate, and melamine polyphosphate. These salts may be used either individually or in combination. Preferred of them is melamine pyrophosphate in terms of flame retardancy, handleability, and storage stability. When two or more of the melamine salts are used in combination, the higher the ratio of melamine pyrophosphate, the more preferable the combination. The molar ratio between pyrophosphoric acid and melamine in melamine pyrophosphate is preferably 1:2.

While the melamine phosphate may be obtained by the reaction between a corresponding phosphoric acid or phosphate and melamine, it is preferable to use as component (A) melamine pyrophosphate or melamine polyphosphate (particularly melamine pyrophosphate) obtained by heat-condensation of monomelamine orthophosphate.

The piperazine salt used as component (B) in the flame retardant composition of the first invention is selected from the group consisting of piperazine orthophosphate, piperazine pyrophosphate, and piperazine polyphosphate. The salts may be used either individually or in combination. Preferred of them is piperazine pyrophosphate in view of flame retardancy, handleability, and storage stability. When piperazine pyrophosphate is used together with the other piperazine salt(s), the higher the ratio of piperazine pyrophosphate, the more preferable the combination. The molar ratio between pyrophosphoric acid and piperazine in piperazine pyrophosphate is preferably 1:1.

While the piperazine phosphate may be obtained by the reaction between a corresponding phosphoric acid or phosphate and piperazine, it is preferable to use as component (B) piperazine pyrophosphate or piperazine polyphosphate (particularly piperazine pyrophosphate) obtained by heat-condensation of monopiperazine bisorthophosphate.

The contents of component (A) and component (B) in the flame retardant composition of the first invention are 20 to 50 parts by mass and 50 to 80 parts by mass, respectively, and preferably, 30 to 45 parts by mass and 55 to 70 parts by mass, respectively, with the proviso that the total amount of component (A) and component (B) is 100 parts by mass.

Next, component (C) in the flame retardant composition of the first invention will be described.

In the invention, a silane coupling agent is used as component (C).

Examples of silane coupling agents include: alkenyl-functional silane coupling agents, such as vinyltrimethoxysilane, vinyltriethoxysilane, vinyltriacetoxysilane, vinyltris(2-methoxyethoxy)silane, vinylmethyldimethoxysilane, octenyltrimethoxysilane, allyltrimethoxysilane, and p-styryltrimethoxysilane; acryl-functional silane coupling agents, such as 3-acryloxypropyltrimethoxysilane and 3-acryloxypropyltriethoxysilane; methacryl-functional silane coupling agents, such as 3-methacryloxypropylmethyldimethoxysilane, 3-methacryloxypropyltrimethoxysilane, 3-methacryloxypropylmethyldiethoxysilane, 3-methacryloxypropyltriethoxysilane, and methacryloxyoctyltrimethoxysilane; epoxy-functional silane coupling agents, such as 2-(3,4-epoxycyclohexyl)ethyltrimethoxysilane, 3 -glycidoxypropylmethyldimethoxysilane, 3 -glycidoxypropyltrimethoxysilane, 3 -glycidoxypropylmethyldiethoxysilane, 3 -glycidoxypropyltriethoxysilane, and glycidoxyoctyltrimethoxysilane; amino-functional silane coupling agents, such as N-2-(aminoethyl)-3 -aminopropylmethyldimethoxysilane, N-2-(aminoethyl)-3-aminopropyltrimethoxysilane, 3-aminopropyltrimethoxysilane, 3 -aminopropyltriethoxysilane, 3-triethoxysilyl-N-(1,3-dimethyl-butylidene)propylamine, N-phenyl-3-aminopropyltrimethoxysilane, N,N'-bis[3-(trimethoxysilyl)propyl]ethylenediamine, and a hydrochloride of N-(vinylbenzyl)-2-aminoethyl-3-aminopropyltrimethoxysilane; isocyanurate-functional silane coupling agents, such as tris-(trimethoxysilylpropyl)isocyanurate; mercapto-functional silane coupling agents, such as 3 -mercaptopropylmethyldimethoxysilane, 3 -mercaptopropyltrimethoxysilane, and 3-mercaptopropyltriethoxysilane; ureido-functional silane coupling agents, such as 3-ureidopropyltrimethoxysilane and 3-ureidopropyltriethoxysilane; sulfide-functional silane coupling agents, such as bis(triethoxysilylpropyl)tetrasulfide; thioester-functional silane coupling agents, such as 3-octanoylthio-1-propyltriethoxysilane; and isocyanate-functional silane coupling agents, such as 3-isocyanate propyltriethoxysilane and 3-isocyanate propyltrimethoxysilane.

Among them preferred are epoxy-functional silane coupling agents in view of flame retardancy and handleability, and also improvement in storage stability by preventing the flame retardant powder from coagulating and 2-(3,4-epoxycyclohexyl)ethyltrimethoxysilane, 3 -glycidoxypropylmethyldimethoxysilane, 3 -glycidoxypropyltrimethoxysilane, 3 -glycidoxypropylmethyldiethoxysilane, 3 -glycidoxypropyltriethoxysilane, and glycidoxyoctyltrimethoxysilane are more preferred.

Commercially available products of silane coupling agents can be used, with examples including: vinyltrimethoxysilane, such as KBM-1003 manufactured by Shin-Etsu Chemical Co., Ltd., A-171 manufactured by Momentive Performance Materials Japan LLC, Z-6300 manufactured by Dow Corning Toray Co., Ltd., GENIOSIL XL10 manufactured by Wacker Asahikasei Silicone Co., Ltd., and Sila-Ace S210 manufactured by Nichibi Trading Co., Ltd.; vinyltriethoxysilane, such as KBE-1003 manufactured by Shin-Etsu Chemical Co., Ltd., A-151 manufactured by Momentive Performance Materials Japan LLC, Z-6519 manufactured by Dow Corning Toray Co., Ltd., GENIOSIL GF56 manufactured by Wacker Asahikasei Silicone Co., Ltd., and Sila-Ace S220 manufactured by Nichibi Trading Co., Ltd.; vinyltriacetoxysilane, such as GENIOSIL GF62 manufactured by Wacker Asahikasei Silicone Co., Ltd.; vinyltris(2-methoxyethoxy)silane, such as A-172 manufactured by Momentive Performance Materials Japan LLC; vinylmethyldimethoxysilane, such as A-2171 manufactured by Momentive Performance Materials Japan LLC, and GENIOSIL XL12 manufactured by Wacker Asahikasei Silicone Co., Ltd.; octenyltrimethoxysilane, such as KBM-1083 manufactured by Shin-Etsu Chemical Co., Ltd.; allyltrimethoxysilane, such as Z-6825 manufactured by Dow Corning Toray Co., Ltd.; p-styryltrimethoxysilane, such as KBM-1403 manufactured by Shin-Etsu Chemical Co., Ltd.; 3-acryloxypropyltrimethoxysilane, such as KBM-5103; 3-methacryloxypropylmethyldimethoxysilane, such as KBM-502 manufactured by Shin-Etsu Chemical Co., Ltd., and Z-6033 manufactured by Dow Corning Toray Co., Ltd.; 3-methacryloxypropyltrimethoxysilane, such as KBM-503 manufactured by Shin-Etsu Chemical Co., Ltd., A-174 manufactured by Momentive Performance Materials Japan LLC, Z-6030 manufactured by Dow Corning Toray Co., Ltd., GENIOSIL GF31 manufactured by Wacker Asahikasei Silicone Co., Ltd., and Sila-Ace S710 manufactured by Nichibi Trading Co., Ltd.; 3-methacryloxypropylmethyldiethoxysilane, such as KBE-502 manufactured by Shin-Etsu Chemical Co., Ltd.; 3-methacryloxypropyltriethoxysilane, such as KBE-503 manufactured by Shin-Etsu Chemical Co., Ltd., and Y-9936 manufactured by Momentive Performance Materials Japan LLC; methacryloxyoctyltrimethoxysilane, such as KBM-5803 manufactured by Shin-Etsu Chemical Co., Ltd.; 2-(3,4-epoxycyclohexyl)ethyltrimethoxysilane, such as KBM-303 manufactured by Shin-Etsu Chemical Co., Ltd., A-186 manufactured by Momentive Performance Materials Japan LLC, Z-6043 manufactured by Dow Corning Toray Co., Ltd., and Sila-Ace S530 manufactured by Nichibi Trading Co., Ltd.; 3-glycidoxypropylmethyldimethoxysilane, such as KBM-402 manufactured by Shin-Etsu Chemical Co., Ltd., Z-6044 manufactured by Dow Corning Toray Co., Ltd., and Sila-Ace S520 manufactured by Nichibi Trading Co., Ltd.; 3-glycidoxypropyltrimethoxysilane, such as KBM-403 manufactured by Shin-Etsu Chemical Co., Ltd., A-187 manufactured by Momentive Performance Materials Japan LLC, Z-6040 manufactured by Dow Corning Toray Co., Ltd., GENIOSIL GF80 manufactured by Wacker Asahikasei Silicone Co., Ltd., Sila-Ace S510 manufactured by Nichibi Trading Co., Ltd.; 3-glycidoxypropylmethyldiethoxysilane, such as KBE-402 manufactured by Shin-Etsu Chemical Co., Ltd.; 3-glycidoxypropyltriethoxysilane, such as KBE-403 manufactured by Shin-Etsu Chemical Co., Ltd., A-1871 manufactured by Momentive Performance Materials Japan LLC, and GENIOSIL GF82 manufactured by Wacker Asahikasei Silicone Co., Ltd.; glycidoxyoctyltrimethoxysilane, such as KBM-4803 manufactured by Shin-Etsu Chemical Co., Ltd.; N-2-(aminoethyl)-3-aminopropylmethyldimethoxysilane, such as KBM-602 manufactured by Shin-Etsu Chemical Co., Ltd., A-2120 manufactured by Momentive Performance Materials Japan LLC, GENIOSIL GF-95 manufactured by Wacker Asahikasei Silicone Co., Ltd., and Sila-Ace S310 manufactured by Nichibi Trading Co., Ltd.; N-2-(aminoethyl)-3-aminopropyltrimethoxysilane, such as KBM-603 manufactured by Shin-Etsu Chemical Co., Ltd., A-1120 manufactured by Momentive Performance Materials Japan LLC, A-1122 manufactured by Momentive Performance Materials Japan LLC, Z-6020 manufactured by Dow Corning Toray Co., Ltd., Z-6094 manufactured by Dow Corning Toray Co., Ltd., GENIOSIL GF-91 manufactured by Wacker Asahikasei Silicone Co., Ltd., and Sila-Ace S320 manufactured by Nichibi Trading Co., Ltd.; 3-aminopropyltrimethoxysilane, such as KBM-903 manufactured by Shin-Etsu Chemical Co., Ltd., A-1110 manufactured by Momentive Performance Materials Japan LLC, Z-6610 manufactured by Dow Corning Toray Co., Ltd., and Sila-Ace S360 manufactured by Nichibi Trading Co., Ltd.; 3-aminopropyltriethoxysilane, such as KBE-903, A-1100 manufactured by Momentive Performance Materials Japan LLC, Z-6011 manufactured by Dow Corning Toray Co., Ltd., and Sila-Ace S330 manufactured by Nichibi Trading Co., Ltd.; 3-triethoxysilyl-N-(1,3-dimethyl-butylidene)propylamine, such as KBE-9103, and Sila-Ace S340 manufactured by Nichibi Trading Co., Ltd.; N-phenyl-3-aminopropyltrimethoxysilane, such as KBM-573 manufactured by Shin-Etsu Chemical Co., Ltd., Y-9669 manufactured by Momentive Performance Materials Japan LLC, and Z-6883 manufactured by Dow Corning Toray Co., Ltd.; N,N'-bis[3-(trimethoxysilyl)propyl]ethylenediamine, such as Sila-Ace XS1003 manufactured by Nichibi Trading Co., Ltd.; N-(vinylbenzyl)-2-aminoethyl-3-aminopropyltrimethoxysilane hydrochloride, such as KBM-575 manufactured by Shin-Etsu Chemical Co., Ltd., Z-6032 manufactured by Dow Corning Toray Co., Ltd., and Sila-Ace S350 manufactured by Nichibi Trading Co., Ltd.; tris-(trimethoxysilylpropyl)isocyanurate, such as KBM-9659 manufactured by Shin-Etsu Chemical Co., Ltd.; 3-mercaptopropylmethyldimethoxysilane, such as KBM-802 manufactured by Shin-Etsu Chemical Co., Ltd., and Z-6852 manufactured by Dow Corning Toray Co., Ltd.; 3-mercaptopropyltrimethoxysilane, such as KBM-803 manufactured by Shin-Etsu Chemical Co., Ltd., A-189 manufactured by Momentive Performance Materials Japan LLC, Z-6062 manufactured by Dow Corning Toray Co., Ltd., and Sila-Ace S810 manufactured by Nichibi Trading Co., Ltd.; 3-mercaptopropyltriethoxysilane, such as A-1891 manufactured by Momentive Performance Materials Japan LLC, and Z-6911 manufactured by Dow Corning Toray Co., Ltd.; 3-ureidopropyltriethoxysilane, such as A-1160 manufactured by Momentive Performance Materials Japan LLC; 3-ureidopropyltrialkoxysilane, such as KBE-585 manufactured by Shin-Etsu Chemical Co., Ltd.; bis(triethoxysilylpropyl)tetrasulfide, such as KBE-846 manufactured by Shin-Etsu Chemical Co., Ltd.; 3-octanoylthio-1-propyltriethoxysilane, such as A-LINK599 manufactured by Momentive Performance Materials Japan LLC; 3-isocyanate propyltriethoxysilane, such as KBE-9007 manufactured by Shin-Etsu Chemical Co., Ltd., and A-1310 manufactured by Momentive Performance Materials Japan LLC; and 3-isocyanate propyltrimethoxysilane, such as Y-5187 manufactured by Momentive Performance Materials Japan LLC, and GENIOSIL GF40 manufactured by Wacker Asahikasei Silicone Co., Ltd.

The content of the silane coupling agent of component (C) in the flame retardant composition of the first invention is from 0.01 to 5.0 parts by mass with respect to 100 parts by mass of the total of component (A) and component (B), and is preferably from 0.05 to 3.0 parts by mass, more preferably from 0.1 to 2.0 parts by mass, in view of flame retardancy and handleability, and preventing the flame retardant powder from coagulating to improve storage stability. When the content is less than 0.01 parts by mass, the flame retardant powder may coagulate to cause deterioration in storage stability. When the content is greater than 5.0 parts by mass, flame retardancy may be affected.

Next, component (D) in the flame retardant composition of the first invention will be described.

Component (D) in the flame retardant composition of the first invention is an aliphatic dicarboxylic acid ether ester compound represented by the following general formula (1): 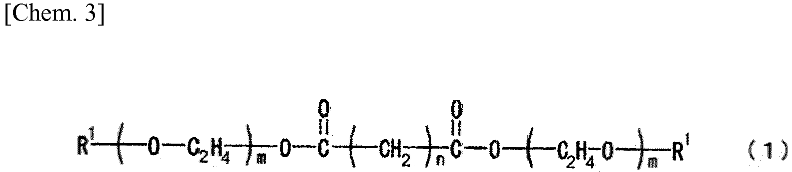 wherein n represents an integer from 2 to 6, m represents an integer from 1 to 3, and R¹ represents a C₁₋₆ alkyl group.

In general formula (1), the C₁₋₆ alkyl group may be a linear alkyl group or a branched alkyl group, with examples including methyl, ethyl, propyl, isopropyl, butyl, isobutyl, sec-butyl, tert-butyl, amyl, isoamyl, tert-amyl, and hexyl groups. R¹ is preferably a butyl group in view of flame retardancy, and particularly handleability and storage stability.

In general formula (1), n is preferably 4 in view of flame retardancy, and particularly handleability and storage stability. Further, in general formula (1), m is preferably 2 in view of flame retardancy, and particularly handleability and storage stability.

Examples of aliphatic dicarboxylic acid ether ester compounds represented by general formula (1) in the first invention include the following compounds Nos. 1 to 22.

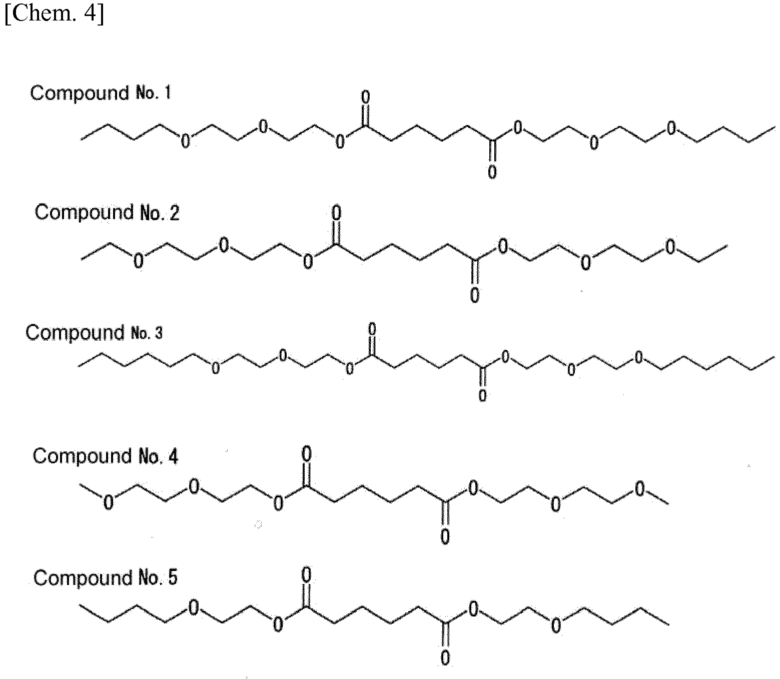

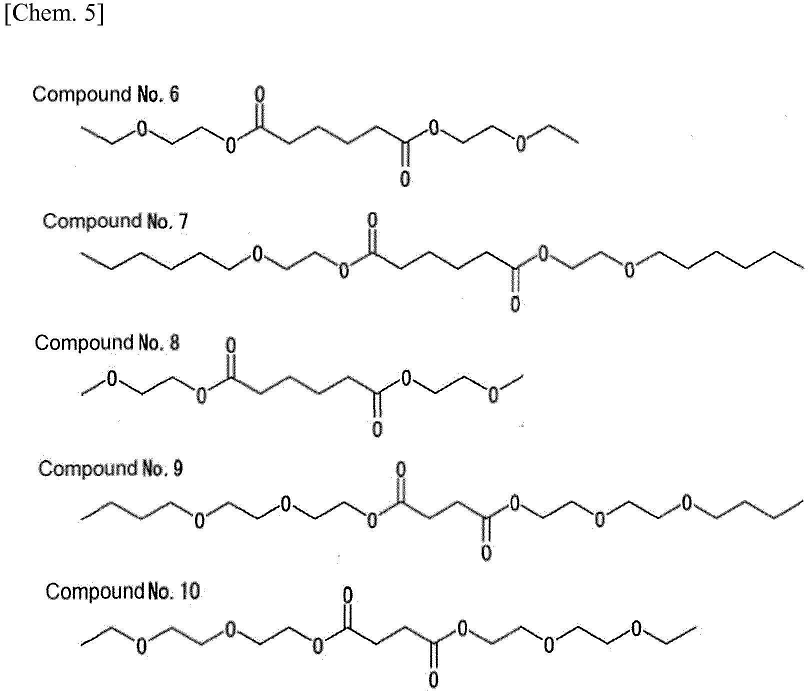

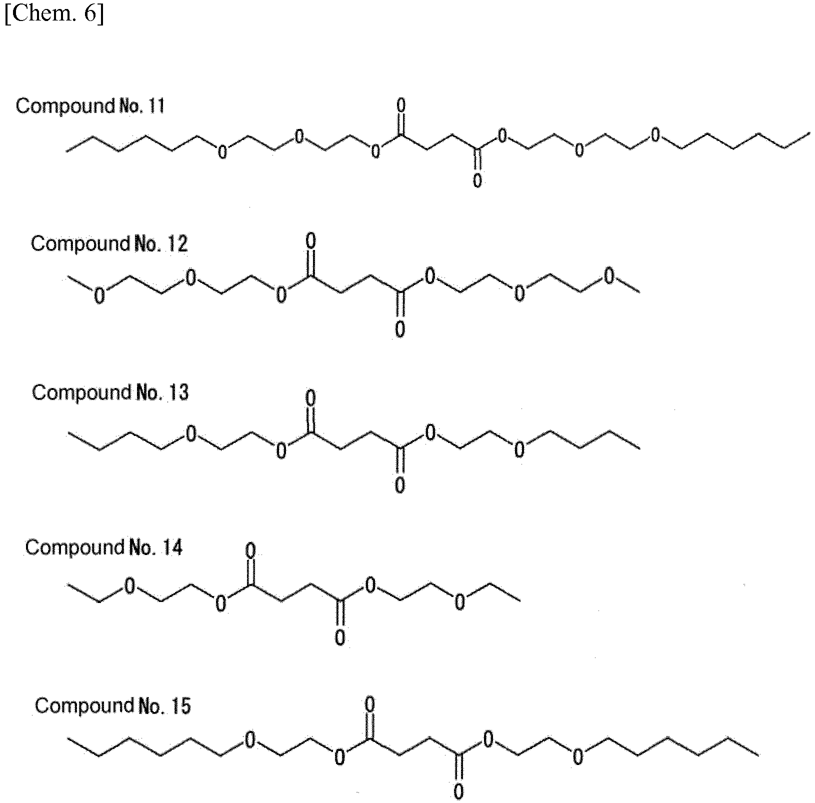

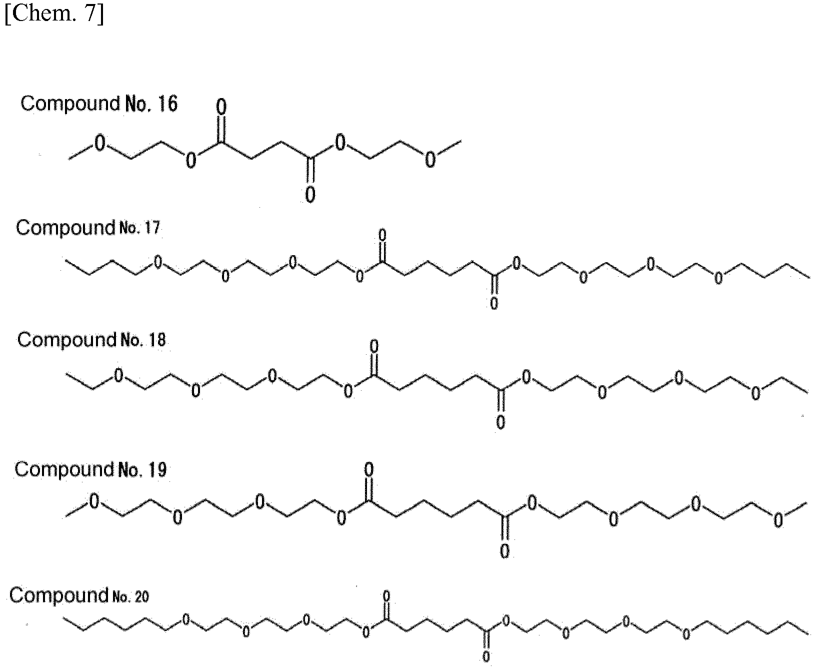

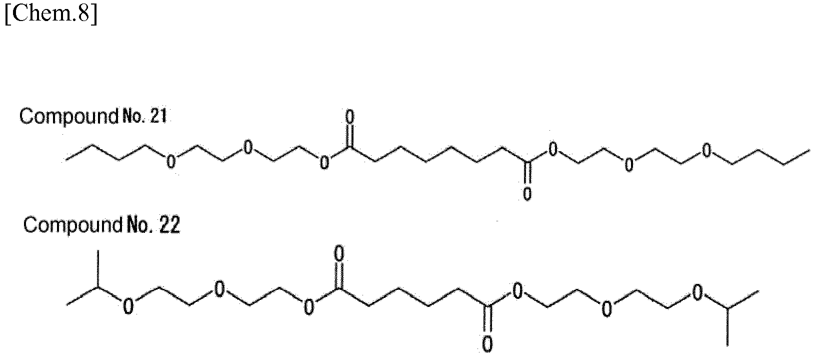

The aliphatic dicarboxylic acid ether ester compound represented by general formula (1) can be produced according to conventionally known methods.

An example of its production process involves esterification between: a C₄₋₈ aliphatic dicarboxylic acid; and a diethylene glycol monoalkyl ether, an ethylene glycol monoalkyl ether, or a triethylene glycol monoalkyl ether in which the alkyl group includes from 1 to 6 carbon atoms. An ordinary catalyst may be used for the esterification.

Examples of C₄₋₈ aliphatic dicarboxylic acids used for production include succinic acid, glutaric acid, adipic acid, pimelic acid, and suberic acid. The aliphatic dicarboxylic acid may be a derivative of an aliphatic dicarboxylic acid (such as an acid anhydride, an alkylester, an alkali metal salt, or an acid halide).

Examples of the diethylene glycol monoalkyl ether used for production in which the alkyl group includes from 1 to 6 carbon atoms include diethylene glycol monomethyl ether, diethylene glycol monoethyl ether, diethylene glycol monopropyl ether, diethylene glycol monobutyl ether, diethylene glycol monopentyl ether, diethylene glycol monohexyl ether, and diethylene glycol monoisopropyl ether. Examples of the ethylene glycol monoalkyl ether in which the alkyl group includes from 1 to 6 carbon atoms include ethylene glycol monomethyl ether, ethylene glycol monoethyl ether, ethylene glycol monopropyl ether, ethylene glycol monobutyl ether, ethylene glycol monopentyl ether, ethylene glycol monohexyl ether, and ethylene glycol monoisopropyl ether. Examples of the triethylene glycol monoalkyl ether in which the alkyl group includes from 1 to 6 carbon atoms include triethylene glycol monomethyl ether, triethylene glycol monoethyl ether, triethylene glycol monopropyl ether, triethylene glycol monobutyl ether, triethylene glycol monopentyl ether, triethylene glycol monohexyl ether, and triethylene glycol monoisopropyl ether.

For example, Compound No. 1 above can be produced by esterifying 1 mol of adipic acid and 2 mol of diethylene glycol monobutyl ether.

The content of the aliphatic dicarboxylic acid ether ester compound of component (D) in the flame retardant composition of the first invention is from 0.01 to 1.0 part by mass with respect to 100 parts by mass of the total of component (A) and component (B), and is preferably from 0.05 to 0.5 parts by mass, more preferably from 0.1 to 0.5 parts by mass, even more preferably from 0.1 to 0.3 parts by mass, in view of flame retardancy, handleability, and storage stability. When the content is less than 0.01 parts by mass, powder-rising may not be prevented to result in deterioration in handleability. When the content is greater than 1.0 part by mass, storage stability and flame retardancy may be affected.

The flame retardant composition of the first invention preferably include zinc oxide, which serves as a flame-retardant aid, as component (G). The zinc oxide may be surface-treated. Commercially available products of zinc oxide may be used, and examples include Zinc Oxide JIS class 1 (manufactured by Mitsui Mining and Smelting Co., Ltd.), partially-coated zinc oxide (manufactured by Mitsui Mining and Smelting Co., Ltd.), Nanofine 50 (ultrafine zinc oxide particles; average particle size: 0.02 µm; manufactured by Sakai Chemical Industry Co., Ltd.), and Nanofine K (ultrafine zinc oxide particles coated with zinc silicate; average particle size: 0.02 µm; manufactured by Sakai Chemical Industry Co., Ltd.).

The content of zinc oxide, as component (G), in the flame retardant composition of the first invention is preferably from 0.01 to 10 parts by mass, more preferably from 0.5 to 10 parts by mass, even more preferably from 1.0 to 7.5 parts by mass, with respect to 100 parts by mass of the total of component (A) and component (B) in view of flame retardancy.

Further, the flame retardant composition of the first invention may include, as necessary, an anti-drip agent as long as it does not impair the effects of the invention. Examples of anti-drip agents include fluorine-containing anti-drip agents, sheet silicates, and silicone rubbers.

Concrete examples of fluorine-containing anti-drip agents include: fluorocarbon resins such as polytetrafluoroethylene, polyvinylidene fluoride, and polyhexafluoropropylene; and alkali metal salts of perfluoroalkane sulfonic acids or alkaline earth metal salts of perfluoroalkane sulfonic acids, such as sodium perfluoromethane sulfonate, potassium perfluoro-n-butane sulfonate, potassium perfluoro-t-butane sulfonate, sodium perfluorooctane sulfonate, and calcium perfluoro-2-ethylhexane sulfonate.

Examples of sheet silicates include smectite clay minerals, such as montmorillonite, saponite, hectorite, beidellite, stevensite, and nontronite; and vermiculite, halloysite, swelling mica, and talc. The sheet silicate may have an organic cation, a quaternary ammonium cation, or a phosphonium cation intercalated between the layers thereof.

Among the aforementioned anti-drip agents, fluorine-containing anti-drip agents are particularly preferred, and polytetrafluoroethylene is most preferred in view of drip preventability.

When the anti-drip agent is included in the flame retardant composition, the content of the anti-drip agent is preferably from 0.005 to 5 parts by mass, more preferably from 0.01 to 5 parts by mass, even more preferably from 0.05 to 3 parts by mass, further preferably from 0.1 to 1 part by mass, with respect to 100 parts by mass of the total of component (A) and component (B). When the content is less than 0.005 parts by mass, the drip-preventing effect may not be sufficient, and when the content exceeds 5 parts by mass, the characteristics of the resin may deteriorate.

The flame retardant composition of the first invention may further include, as necessary, a silicone oil in order to improve water resistance, etc., as long as it does not impair the effects of the invention. Examples of silicone oils include: dimethyl silicone oils (polysiloxane having methyl at its all side chains and terminals), methylphenyl silicone oils (polysiloxane having phenyl at part of its side chains), methyl hydrogen silicone oils (polysiloxane having hydrogen at part of its side chains), and copolymers of thereof. Modified silicone oils derived from these silicone oils by introducing an organic group to part of their side chains and/or terminals are also useful, including amine-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, phenol-modified, and/or aralkyl-modified silicone oils.

Concrete examples of commercially available products of silicone oils are listed below. Examples of dimethyl silicone oils include KF-96 (manufactured by Shin-Etsu Chemical Co., Ltd.), KF-965 (manufactured by Shin-Etsu Chemical Co., Ltd.), and KF-968 (manufactured by Shin-Etsu Chemical Co., Ltd.). Examples of methyl hydrogen silicone oils or silicone oils having a methylhydrogen polysiloxane structure include KF-99 (manufactured by Shin-Etsu Chemical Co., Ltd.), KF-9901 (manufactured by Shin-Etsu Chemical Co., Ltd.), HMS-151 (manufactured by Gelest Inc.), HMS-071 (manufactured by Gelest Inc.), HMS-301 (manufactured by Gelest Inc.), and DMS-H21 (manufactured by Gelest Inc.). Examples of methylphenyl silicone oils include KF-50 (manufactured by Shin-Etsu Chemical Co., Ltd.), KF-53 (manufactured by Shin-Etsu Chemical Co., Ltd.), KF-54 (manufactured by Shin-Etsu Chemical Co., Ltd.), and KF-56 (manufactured by Shin-Etsu Chemical Co., Ltd.). Examples of epoxy-modified products include X-22-343 (manufactured by Shin-Etsu Chemical Co., Ltd.), X-22-2000 (manufactured by Shin-Etsu Chemical Co., Ltd.), KF-101 (manufactured by Shin-Etsu Chemical Co., Ltd.), KF-102 (manufactured by Shin-Etsu Chemical Co., Ltd.), and KF-1001 (manufactured by Shin-Etsu Chemical Co., Ltd.). An example of a carboxyl-modified product includes X-22-3701E (manufactured by Shin-Etsu Chemical Co., Ltd.). Examples of carbinol-modified products include X-22-4039 (manufactured by Shin-Etsu Chemical Co., Ltd.) and X-22-4015 (manufactured by Shin-Etsu Chemical Co., Ltd.). An example of an amine-modified product includes KF-393 (manufactured by Shin-Etsu Chemical Co., Ltd.).

When the silicone oil is included in the flame retardant composition, the content thereof is preferably from 0.01 to 5.0 parts by mass, more preferably from 0.05 to 3.0 parts by mass, even more preferably from 0.1 to 2.0 parts by mass, with respect to 100 parts by mass of the total of component (A) and component (B).

The flame retardant composition of the first invention may also include, as necessary, a polyhydric alcohol as a flame-retardant aid, as long as it does not impair the effects of the invention. A polyhydric alcohol is a compound having a plurality of hydroxyl groups, including pentaerythritol, dipentaerythritol, tripentaerythritol, polypentaerythritol, neopentyl glycol, trimethylol propane, ditrimethylol propane, 1,3,5-tris(2-hydroxyethyl)isocyanurate (THEIC), polyethylene glycol, glycerol, diglycerol, mannitol, maltitol, lactitol, sorbitol, erythritol, xylitol, xylose, sucrose, trehalose, inositol, fructose, maltose, and lactose. Preferred of them is at least one compound selected from the group consisting of pentaerythritol and pentaerythritol condensates, such as dipentaerythritol, tripentaerythritol, and higher condensates (polypentaerythritol). Pentaerythritol condensates including dipentaerythritol are more preferred. Dipentaeryhthritol is the most preferred. THEIC and sorbitol are also preferably used.

When the polyhydric alcohol is included in the flame retardant composition, the content thereof is preferably from 0.5 to 15 parts by mass, more preferably from 2 to 12 parts by mass, even more preferably from 5 to 10 parts by mass, with respect to 100 parts by mass of the total of component (A) and component (B).

The flame retardant composition of the first invention may also include, as necessary, a lubricant as long as it does not impair the effects of the invention. Examples of lubricants include: pure hydrocarbon lubricants, such as liquid paraffin, natural paraffin, microwax, synthetic paraffin, low molecular-weight polyethylene, and polyethylene wax; halogenated hydrocarbon lubricants; fatty acid lubricants, such as higher fatty acids and oxyfatty acids; fatty acid amide lubricants, such as fatty acid amides and bis-fatty acid amides; ester lubricants, such as lower alcohol esters of fatty acids, polyhydric alcohol esters of fatty acids (e.g. glycerides), polyglycol esters of fatty acids, and fatty alcohol esters of fatty acids (ester waxes); metal soap, fatty alcohols, polyhydric alcohols, polyglycols, polyglycerols, partial esters of fatty acids and polyhydric alcohols, partial esters of fatty acids and polyglycols or polyglycerols, silicone oils, and mineral oils. These lubricants may be used in combinations of two or more.

When lubricant(s) are included in the flame retardant composition, the content thereof is preferably from 0.05 to 10 parts by mass, more preferably from 0.1 to 5 parts by mass, with respect to 100 parts by mass of the total of component (A) and component (B).

In the flame retardant composition of the first invention, it is possible to use, as necessary, one or more of halogen-free organic or inorganic flame retardants or flame retardant aids as long as the effects of the invention are not impaired. Examples of useful flame retardants and flame retardant aids include triazine ring-containing compounds, metal hydroxides, phosphoric ester flame retardants, condensed phosphoric ester flame retardants, phosphate flame retardants, inorganic phosphorus flame retardants, dialkyl phosphinates, silicone flame retardants, metal oxides, boric acid compounds, expandable graphite, other inorganic flame retardant aids, and other organic flame retardants.

Examples of the triazine-ring-containing compounds include melamine, ammeline, benzoguanamine, acetoguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

Examples of the metal hydroxides include magnesium hydroxide, aluminum hydroxide, calcium hydroxide, barium hydroxide, zinc hydroxide, and KISUMA® 5A (magnesium hydroxide; manufactured by Kyowa Chemical Industry Co., Ltd.).

Examples of the phosphoric ester flame retardants include trimethyl phosphate, triethyl phosphate, tributyl phosphate, tributoxyethyl phosphate, trichloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis-(t-butylphenyl)phenyl phosphate, tris-(t-butylphenyl) phosphate, isopropylphenyldiphenyl phosphate, bis-(isopropylphenyl)diphenyl phosphate, and tris(isopropylphenyl)phosphate.

Examples of the condensed phosphoric ester flame retardants include 1,3-phenylene bis(diphenyl phosphate), 1,3-phenylene bis(dixylenyl phosphate), and bisphenol A bis(diphenyl phosphate).

Examples of the inorganic phosphorus flame retardant include red phosphorus.

Examples of the dialkylphosphinate salts include aluminum diethylphosphinate and zinc diethylphosphinate.

Examples of other inorganic flame-retardant aids include inorganic compounds such as titanium oxide, aluminum oxide, magnesium oxide, and hydrotalcite, and surface-treated products thereof. Various commercially available products of these flame retardant aids may be used, including TIPAQUE® R-680 (titanium oxide; manufactured by Ishihara Sangyo Kaisha, Ltd.), KYOWA MAG® 150 (magnesium oxide; manufactured by Kyowa Chemical Industry Co., Ltd.), DHT-4A (hydrotalcite; manufactured by Kyowa Chemical Industry Co., Ltd.), and ALCAMIZER® 4 (zinc-modified hydrotalcite; manufactured by Kyowa Chemical Industry Co., Ltd.).

The flame retardant composition of the first invention may include, as necessary, a phenol antioxidant, a phosphorus antioxidant, a thioether antioxidant, a UV absorber, a hindered amine light stabilizer, or other anti-deterioration agents. These components may be incorporated in advance into the flame retardant composition of the invention, or may be added to a synthetic resin at the time of adding the flame retardant composition to the synthetic resin. It is preferable to stabilize the synthetic resin by using these components.

Examples of the phenol antioxidant include 2,6-di-tert-butyl-p-cresol, 2,6-diphenyl-4-octadesiloxyphenol, distearyl(3,5-di-tert-butyl-4-hydroxybenzyl)phosphonate, 1,6-hexamethylene-bis[(3,5-di-tert-butyl-4-hydroxyphenyl)propionic acid amide], 4,4'-thio-bis(6-tert-butyl-m-cresol), 2,2'-methylene-bis(4-methyl-6-tert-butylphenol), 2,2'-methylene-bis(4-ethyl-6-tert-butylphenol), 4,4'-butylidene-bis(6-tert-butyl-m-cresol), 2,2'-ethylidene-bis(4,6-di-tert-butylphenol), 2,2'-ethylidene-bis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[methyl 3-(3,5-di-tert-butyl-4-hydroxyphenyl)propionate]methane, thiodiethylene glycol bis[(3,5-di-tert-butyl-4-hydroxyphenyl)propionate], 1,6-hexamethylene-bis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl]terephthalat e, 1,3,5-tris[(3,5-di-tert-butyl-4-hydroxyphenyl)propionyloxyethyl] isocyanurate, 3,9-bis[1,1-dimethyl-2-{(3-tert-butyl-4-hydroxy-5-methylphenyl)propionyloxy}ethyl]-2 ,4,8,10-tetraoxaspiro[5,5]undecane, and triethylene glycol bis[(3-tert-butyl-4-hydroxy-5-methylphenyl)propionate]. The amount of the phenol antioxidant(s) when blended with a synthetic resin is preferably from 0.001 to 5 mass%, more preferably from 0.05 to 3 mass%, in the synthetic resin composition.

Examples of the phosphorusantioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene bis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylene-bis(4,6-tert-butylphenyl)-2-ethylhexyl phosphite, 2,2'-methylene-bis(4,6-tert-butylphenyl)-octadecyl phosphite, 2,2'-ethylidene-bis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)a mine, and a phosphite of 2-ethyl-2-butylpropylene glycol and 2,4,6-tri-tert-butylphenol. The amount of the phosphorus antioxidant(s) when blended with a synthetic resin is preferably from 0.001 to 5 mass%, more preferably from 0.05 to 3 mass%, in the synthetic resin composition.

Examples of the thioether antioxidant include dialkyl thiodipropionates, such as dilauryl thiodipropionate, dimyristyl thiodipropionate, and distearyl thiodipropionate, and pentaerythritol tetra(β-alkylmercaptopropionate) esters. The amount of the thioether antioxidant(s) when blended with a synthetic resin is preferably from 0.001 to 5 mass%, more preferably from 0.05 to 3 mass%, in the synthetic resin composition.

Examples of the UV absorber include: 2-hydroxybenzophenones such as 2,4-dihydroxybenzophenone, 2-hydroxy-4-methoxybenzophenone, 2-hydroxy-4-octoxybenzophenone, and 5,5' -methylene-bis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2' -hydro xy-5' -tert-octylphenyl)benzotriazo le, 2-(2'-hydroxy-3',5'-dicumylphenyl)benzotriazole, 2,2'-methylene-bis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. he amount of the UV absorber(s) when blended with a synthetic resin is preferably from 0.001 to 5 mass%, more preferably from 0.05 to 3 mass%, in the synthetic resin composition.

Examples of the hindered amine light stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-tetramethyl-4-piperidyl) sebacate, bis(1-octoxy-2,2,6,6-tetramethyl-4-piperidyl) sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazi ne polycondensate, 1,6-bis(2,2,6,6-tetramethyl-4-piperidylamino)hexane/2,4-dichloro-6-tert-octylamino-s-tr iazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin -6-yl]-1,5,8,12-tetraazadodecane, 1,6,11-tris[2,4-bis(N-butyl-N-(2,2,6,6-tetramethyl-4-piperidyl)amino)-s-triazin-6-yl]ami noundecane, and 1,6,11-tris[2,4-bis(N-butyl-N-(1,2,2,6,6-pentamethyl-4-piperidyl)amino)-s-triazin-6-yl]a minoundecane. The amount of the hindered amine light stabilizer(s) when blended with a synthetic resin is preferably from 0.001 to 5 mass%, more preferably from 0.05 to 3 mass%, in the synthetic resin composition.

Examples of the other anti-deterioration agent include naphthylamines, diphenylamines, p-phenyldiamines, quinolines, hydroquinone derivatives, monophenols, thiobisphenols, hindered phenols, and phosphite esters. The amount of the anti-deterioration agent(s) when blended with a synthetic resin is preferably from 0.001 to 5 mass%, more preferably from 0.05 to 3 mass%, in the synthetic resin composition.

The flame retardant composition of the first invention may include, as optional components, a reinforcing material as long as it does not impair the effects of the invention. These components may also be added to a synthetic resin at the time of adding the flame retardant composition of the first invention to the synthetic resin. The reinforcing material may have a fibrous, plate-like, granular, or powder form as is usual for application to synthetic resins. Concrete examples include: inorganic fibrous reinforcing materials, such as glass fiber, asbestos fiber, carbon fiber, graphite fiber, metallic fiber, potassium titanate whisker, aluminum borate whisker, magnesium whisker, silicon whisker, wollastonite, sepiolite, asbestos, slag fiber, zonolite, ellestadite, gypsum fiber, silica fiber, silica-alumina fiber, zirconia fiber, boron nitride fiber, silicon nitride fiber, and boron fiber; organic fibrous reinforcing materials, such as polyester fiber, nylon fiber, acrylic fiber, regenerated cellulose fiber, acetate fiber, kenaf, ramie, cotton, jute, hemp, sisal, flax, linen, silk, Manila hemp, sugarcane, wood pulp, waste paper, used paper, and wool; and plate-like or granular reinforcing materials, such as glass flakes, non-swellable mica, graphite, metal foil, ceramic beads, clay, mica, sericite, zeolite, bentonite, dolomite, kaoline, silicic acid powder, feldspar powder, potassium titanate, Shirasu balloons, calcium carbonate, magnesium carbonate, barium sulfate, calcium oxide, aluminum oxide, titanium oxide, aluminum silicate, silicon oxide, gypsum, novaculite, dawsonite, and white clay. These reinforcing materials may be coated or sized with a thermoplastic resin, such as an ethylene/vinyl acetate copolymer, or a thermosetting resin, such as epoxy resin, or may have been treated with, for example, a coupling agent such as aminosilane or epoxy silane.

The flame retardant composition of the first invention may further include, as an optional component, a nucleating agent as long as it does not affect the effects of the invention. Any nucleating agents commonly employed for polymers may be used as appropriate. In the first invention, either of an inorganic nucleating agent or an organic nucleating agent may be used. These components may also be added to a synthetic resin at the time of adding the flame retardant composition of the first invention to the synthetic resin.

Concrete examples of inorganic nucleating agents include kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and metal salts of phenylphosphonate etc. These inorganic nucleating agents may be modified with organic substances in order to improve their dispersibility in the composition.

Concrete examples of organic nucleating agents include: metal salts of organic carboxylic acids, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexane carboxylate; organic sulfonate salts, such as sodium p-toluenesulfonate and sodium sulfoisophthalate; carboxylic acid amides, such as stearamide, ethylenebislauramide, palmitamide, hydroxystearamide, erucamide, and trimesic acid tris(t-butylamide); benzylidenesorbitol and derivatives thereof; metal salts of phosphorus compounds, such as sodium 2,2'-methylene-bis(4,6-di-t-butylphenyl)phosphate; and sodium 2,2-methylbis(4,6-di-t-butylphenyl).

The flame retardant composition of the first invention may further include, as an optional component, an acrylic processing aid as long as it does not impair the effects of the invention. The acrylic processing aid is exemplified by a homopolymer of a (meth)acrylatic ester or a copolymer of two or more of (meth)acrylic esters. The component(s) may also be added to a synthetic resin at the time of adding the flame retardant composition of the invention to the synthetic resin. Examples of (meth)acrylate esters for homopolymers or copolymers include (meth)acrylic esters such as methyl acrylate, methyl methacrylate, ethyl acrylate, ethyl methacrylate, n-propyl acrylate, isopropyl acrylate, n-propyl methacrylate, isopropyl methacrylate, n-butyl acrylate, isobutyl acrylate, t-butyl methacrylate, n-hexyl acrylate, n-hexyl methacrylate, 2-ethylhexyl acrylate, 2-ethylhexyl methacrylate, dodecyl methacrylate, and tridecyl methacrylate. (Meth)acrylic acid and (meth)acrylic esters having a hydroxy group are also useful.

The flame retardant composition of the first invention may include, as an optional component, a plasticizer as long as it does not impair the effects of the invention. Any plasticizers that are commonly used for polymers may be used as appropriate, and examples include polyester plasticizers, glycerol plasticizers, polycarboxylic ester plasticizers, polyalkylene glycol plasticizers, and epoxy plasticizers. These components may also be added to a synthetic resin at the time of adding the flame retardant composition of the first invention to the synthetic resin.

Further, if necessary, the flame retardant composition of the first invention may include additives generally used for synthetic resins as long as the effects of the invention are not impaired. Useful additives include crosslinking agents, antistatic agents, metal soaps, fillers, antifogging agents, anti-plate-out agents, surface-treating agents, fluorescers, fungicides, bactericides, foaming agents, metal deactivators, mold-release agents, pigments, and processing aids other than the aforementioned acrylic processing aids. These components also may be added to a synthetic resin at the time of adding the flame retardant composition of the first invention to the synthetic resin.

The flame retardant composition of the first invention can be obtained simply by mixing components (A) to (D), and component (G), which is used as necessary, together with other optional components as necessary. For mixing, any one of various types of mixers can be used. Heating can be performed while mixing. Examples of usable mixers include tumbler mixers, Henschel mixers, ribbon blenders, V-type mixers, W-type mixers, super mixers, and Nauta mixers.

Next, the second invention will be described. The explanation given in the first invention is applied as appropriate to features that are not particularly explained for the second invention.

Component (A) in the flame retardant composition of the second invention is the same as the melamine salt used as component (A) in the flame retardant composition of the first invention, and the explanation on component (A) in the flame retardant composition in the first invention is applied as-is.

Component (B) in the flame retardant composition of the invention is the same as the piperazine salt used as component (B) in the flame retardant composition of the first invention, and the explanation on component (B) in the flame retardant composition in the first invention is applied as-is.

The contents of component (A) and component (B) in the flame retardant composition of the second invention are 20 to 50 parts by mass and 50 to 80 parts by mass, respectively, and preferably, 30 to 45 parts by mass and 55 to 70 parts by mass, respectively, with the proviso that the total content of component (A) and component (B) is 100 parts by mass.

Next, component (E) in the flame retardant composition of the second invention will be described.

Component (E) in the flame retardant composition of the second invention is an aliphatic carboxylic acid ester compound represented by the following general formula (2): 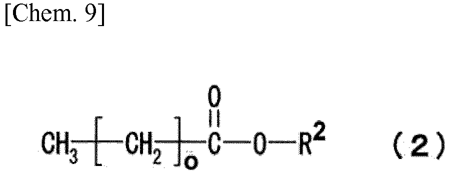 wherein o represents an integer from 10 to 20, and R² represents a C₁₋₈ alkyl group.

In general formula (2), the C₁₋₈ alkyl group represented by R² may be a linear alkyl group or a branched alkyl group, with examples including methyl, ethyl, propyl, isopropyl, butyl, isobutyl, sec-butyl, tert-butyl, amyl, isoamyl, tert-amyl, hexyl, heptyl, 1-ethylpentyl, isoheptyl, tert-heptyl, octyl, isooctyl, sec-octyl, tert-octyl, and 2-ethylhexyl groups. As for R², C₂₋₆ alkyl groups are preferred, and a butyl group is more preferred, in view of flame retardancy, and particularly handleability and storage stability.

In general formula (2), o is preferably from 14 to 20, more preferably 16, in view of flame retardancy, and particularly handleability and storage stability.

Examples of aliphatic carboxylic acid ester compounds represented by general formula (2) in the second invention include the following compounds Nos. 23 to 44.

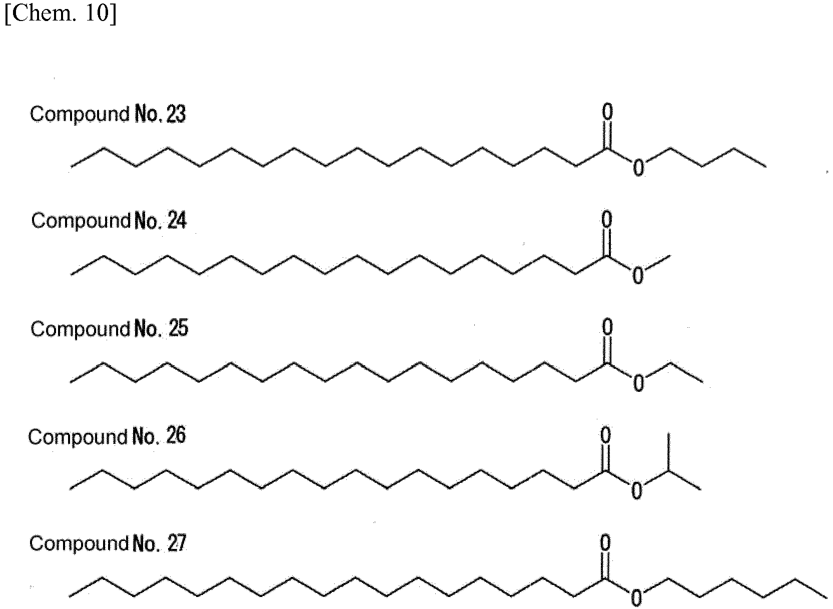

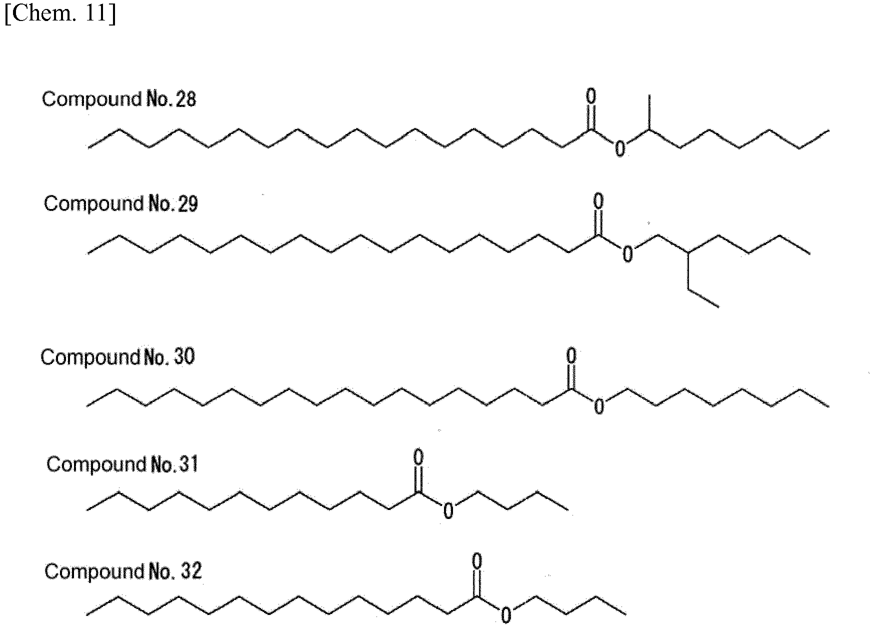

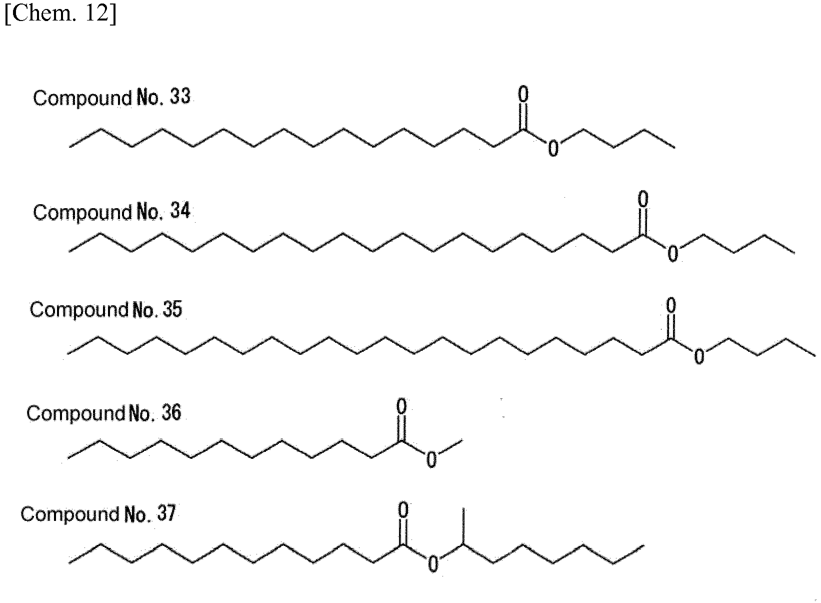

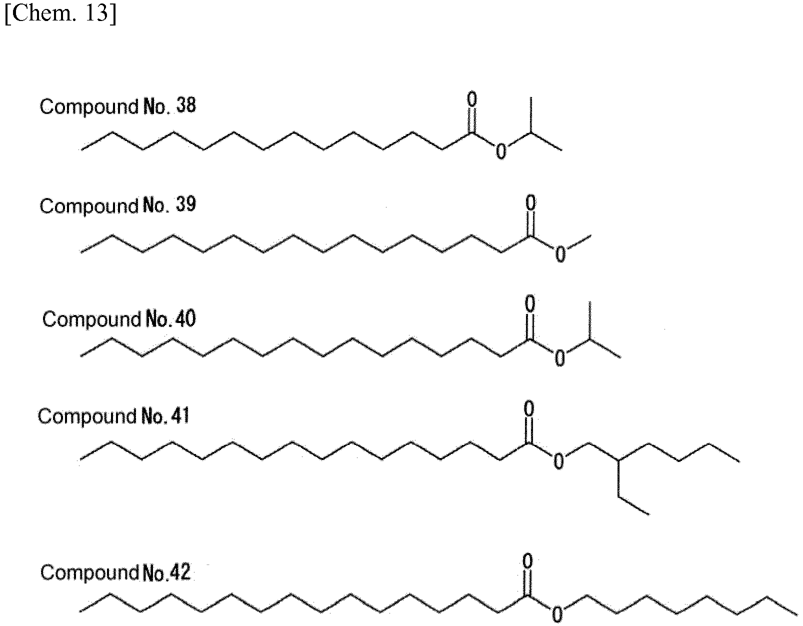

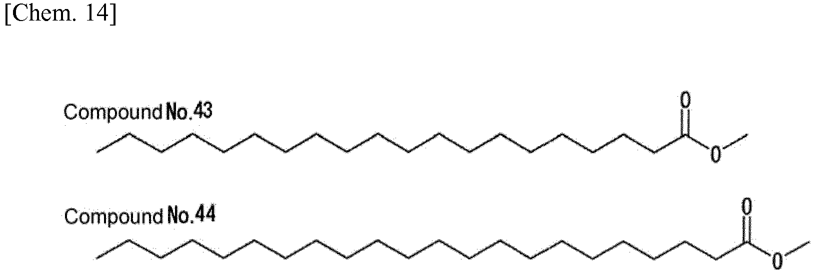

The aliphatic carboxylic acid ester compound represented by general formula (2) in the invention can be produced according to conventionally known methods.

An example of its production process involves esterification between a C₁₂₋₂₂ aliphatic carboxylic acid and a C₁₋₈ aliphatic alcohol. An ordinary catalyst may be used for the esterification.

Examples of C₁₂₋₂₂ aliphatic carboxylic acids used for production include lauric acid, myristic acid, pentadecanoic acid, palmitic acid, heptadecanoic acid, stearic acid, arachidic acid, and behenic acid. The aliphatic carboxylic acid may be a derivative of an aliphatic carboxylic acid (such as an acid anhydride, an alkylester, an alkali metal salt, or an acid halide).

Examples of C₁₋₈ aliphatic alcohols used for production include methanol, ethanol, propanol, isopropanol, n-butanol, isobutanol, sec-butanol, tert-butanol, n-amyl alcohol, sec-amyl alcohol, isoamyl alcohol, tert-amyl alcohol, neopentyl alcohol, hexanol, heptanol, n-octanol, 2-octanol, and 2-ethylhexanol.

For example, Compound No. 23 above can be produced by esterifying stearic acid and n-butanol in an equimolar ratio.

The content of the aliphatic carboxylic acid ester compound of component (E) in the flame retardant composition of the second invention is from 0.01 to 1.0 part by mass with respect to 100 parts by mass of the total of component (A) and component (B), and is preferably from 0.05 to 0.5 parts by mass, more preferably from 0.1 to 0.5 parts by mass, even more preferably from 0.1 to 0.3 parts by mass, in view of flame retardancy, handleability, and storage stability. When the content is less than 0.01 parts by mass, powder-rising may not be prevented to result in deterioration in handleability. When the content is greater than 1.0 part by mass, storage stability and flame retardancy may be affected.

In view of preventing the flame retardant powder from coagulating to improve storage stability and dispersibility into synthetic resin, it is preferable that the flame retardant composition of the second invention further include a silicone oil as component (F).

Examples of the silicone oil include those listed hereinbefore as the silicone oils used as necessary in the first invention to improve water resistance etc.

Among the aforementioned silicone oils, methyl hydrogen silicone oil is preferred in view of preventing the flame retardant powder from coagulating to improve storage stability and dispersibility into synthetic resin.

The content of the silicone oil of component (F) in the flame retardant composition of the second invention is preferably from 0.01 to 5.0 parts by mass, more preferably from 0.05 to 3.0 parts by mass, and even more preferably from 0.1 to 2.0 parts by mass, with respect to 100 parts by mass of the total of component (A) and component (B) in view of flame retardancy and also preventing the flame retardant powder from coagulating to improve storage stability and dispersibility into synthetic resin.

As in the flame retardant composition of the first invention, the flame retardant composition of the second invention preferably include zinc oxide, which serves as a flame-retardant aid, as component (G). Component (G) here is the same as component (G) in the flame retardant composition of the first invention, and the explanation on component (G) in the flame retardant composition in the first invention is applied as-is.

The content of zinc oxide, as component (G), in the flame retardant composition of the second invention is preferably from 0.01 to 10 parts by mass, more preferably from 0.5 to 10 parts by mass, even more preferably from 1.0 to 7.5 parts by mass, with respect to 100 parts by mass of the total of component (A) and component (B) in view of flame retardancy.

Further, the flame retardant composition of the second invention may include, as necessary, an anti-drip agent as in the flame retardant composition of the first invention, as long as it does not impair the effects of the invention. Preferable anti-drip agents for the flame retardant composition of the first invention are also preferable in the second invention.

When the anti-drip agent is included in the flame retardant composition, the content of the anti-drip agent is preferably from 0.005 to 5 parts by mass, more preferably from 0.01 to 5 parts by mass, even more preferably from 0.05 to 3 parts by mass, further preferably from 0.1 to 1 part by mass, with respect to 100 parts by mass of the total of component (A) and component (B). When the content is less than 0.005 parts by mass, the drip-preventing effect may not be sufficient, and when the content exceeds 5 parts by mass, the characteristics of the resin may deteriorate.

The flame retardant composition of the second invention may include, as necessary, a polyhydric alcohol as a flame-retardant aid as in the flame retardant composition of the first invention, as long as it does not impair the effects of the invention. Preferable polyhydric alcohols for the flame retardant composition of the first invention are also preferable in the second invention.

When the polyhydric alcohol is included in the flame retardant composition, the content thereof is preferably from 0.5 to 15 parts by mass, more preferably from 2 to 12 parts by mass, even more preferably from 5 to 10 parts by mass, with respect to 100 parts by mass of the total of component (A) and component (B).

The flame retardant composition of the second invention may include, as necessary, a lubricant as in the flame retardant composition of the first invention, as long as it that does not impair the effects of the invention.

When lubricant(s) are included in the flame retardant composition, the content thereof is preferably from 0.05 to 10 parts by mass, more preferably from 0.1 to 5 parts by mass, with respect to 100 parts by mass of the total of component (A) and component (B).

The flame retardant composition of the second invention may further include a hydrotalcite compound in view of heat resistance and weather resistance and reducing the possibility of corrosion in processing machines. In the invention, a hydrotalcite compound refers to a carbonate double salt compound of aluminum and magnesium and/or zinc. The hydrotalcite compound may be a naturally-occurring product or a synthetic product. Examples of methods for synthesizing synthetic products include known methods disclosed, for example, in JP S46-2280B, JP S50-30039B, JP S51-29129B, and JP S61-174270A. In the invention, various hydrotalcite compounds may be used regardless of crystal structure, crystal grain system, the presence/absence of water of crystallization and the amount thereof, etc.

The hydrotalcite compound may be treated with perchloric acid. It is also possible to use a hydrotalcite compound whose surface is covered with, for example, a higher fatty acid such as stearic acid, a higher fatty acid metal salt such as an alkali metal salt of oleic acid, an organic sulfonic acid metal salt such as an alkali metal salt of dodecylbenzenesulfonic acid, a higher fatty acid amide, a higher fatty acid ester, or a wax.

It is preferable to use a compound represented by the following general formula (3) as the hydrotalcite compound:

Mgₓ₁Znₓ₂Al₂(OH)₂₍ₓ₁₊ₓ₂₎₊₄·CO₃·mH₂O ... (3)

wherein x1 and x2 each represent a number satisfying the conditions represented by the following expressions, and m represents a real number: 0≤x2/x1<10; and 2≤x1+x2<20.

Commercially available products may be used for the hydrotalcite compound, with examples including DHT-4 (hydrotalcite; manufactured by Kyowa Chemical Industry Co., Ltd.), DHT-4A (hydrotalcite; manufactured by Kyowa Chemical Industry Co., Ltd.), Magceler 1 (hydrotalcite; manufactured by Kyowa Chemical Industry Co., Ltd.), Alcamizer 1 (hydrotalcite; manufactured by Kyowa Chemical Industry Co., Ltd.), Alcamizer 2 (hydrotalcite; manufactured by Kyowa Chemical Industry Co., Ltd.), Alcamizer 4 (Alcamizer P-93) (zinc-modified hydrotalcite; manufactured by Kyowa Chemical Industry Co., Ltd.), Alcamizer 7 (zinc-modified hydrotalcite; manufactured by Kyowa Chemical Industry Co., Ltd.), and Alcamizer 5 (perchloric acid-treated hydrotalcite; manufactured by Kyowa Chemical Industry Co., Ltd.). Among these, DHT-4A (hydrotalcite; manufactured by Kyowa Chemical Industry Co., Ltd.) is particularly preferable.

The content of the hydrotalcite compound in the flame retardant composition of the second invention is preferably from 0.01 to 5 parts by mass with respect to 100 parts by mass of the total of component (A) and component (B). In view of heat resistance and weather resistance and reducing the possibility of corrosion in processing machines, the content is more preferably from 0.05 to 4 parts by mass, even more preferably from 0.1 to 2 parts by mass.

In order to prevent the flame retardant powder from coagulating to improve storage stability, and also in order to impart water resistance and heat resistance, the flame retardant composition of the second invention may include a silane coupling agent, like component (C) in the flame retardant composition of the first invention, as long as it does not impair the effects of the invention. Among the aforementioned silane coupling agents, epoxy-functional silane coupling agents are preferable in view of water resistance and heat resistance, and preventing the flame retardant powder from coagulating to improve storage stability. As the silane coupling agents, it is possible to use commercially available products listed for component (C) in the flame retardant composition of the first invention.

When the flame retardant composition of the second invention includes a silane coupling agent, the content thereof is preferably from 0.01 to 5.0 parts by mass, more preferably from 0.05 to 3.0 parts by mass, even more preferably from 0.1 to 2.0 parts by mass, with respect to 100 parts by mass of the total of component (A) and component (B).

In the flame retardant composition of the second invention, it is possible to use, as necessary, one or more halogen free organic or inorganic flame retardants or flame-retardant aids as long as the effects of the invention are not impaired. Examples of useful flame retardants and flame retardant aids include triazine ring-containing compounds, metal hydroxides, phosphoric ester flame retardants, condensed phosphoric ester flame retardants, phosphate flame retardants, inorganic phosphorus flame retardants, dialkyl phosphinates, silicone flame retardants, metal oxides, boric acid compounds, expandable graphite, other inorganic flame retardant aids, and other organic flame retardants, as in the flame retardant composition of the first invention.

The flame retardant composition of the second invention may include, as necessary, a phenol antioxidant, a phosphorus antioxidant, a thioether antioxidant, a UV absorber, a hindered amine light stabilizer, or other anti-deterioration agents, as in the flame retardant composition of the first invention. These components may be incorporated in advance into the flame retardant composition of the second invention, or may be added to a synthetic resin at the time of adding the flame retardant composition to the synthetic resin. It is preferable to stabilize the synthetic resin by using these components.

In the case of using the phenol antioxidant(s), the amount thereof when blended with a synthetic resin is preferably from 0.001 to 5 mass%, more preferably from 0.05 to 3 mass%, in the synthetic resin composition.

In the case of using the phosphorus antioxidant(s), the amount thereof when blended with a synthetic resin is preferably from 0.001 to 5 mass%, more preferably from 0.05 to 3 mass%, in the synthetic resin composition.

In the case of using the thioether antioxidant(s), the amount thereof when blended with a synthetic resin is preferably from 0.001 to 5 mass%, more preferably from 0.05 to 3 mass%, in the synthetic resin composition.

In the case of using the UV absorber(s), the amount thereof when blended with a synthetic resin is preferably from 0.001 to 5 mass%, more preferably from 0.05 to 3 mass%, in the synthetic resin composition.

In the case of using the hindered amine light stabilizer(s), the amount thereof when blended with a synthetic resin is preferably from 0.001 to 5 mass%, more preferably from 0.05 to 3 mass%, in the synthetic resin composition.

In the case of using the other anti-deterioration agent(s), the amount thereof when blended with a synthetic resin is preferably from 0.001 to 5 mass%, more preferably from 0.05 to 3 mass%, in the synthetic resin composition.

The flame retardant composition of the second invention may include, as optional components, a reinforcing material, a nucleating agent, and/or a plasticizer as in the flame retardant composition of the first invention, as long as the effects of the invention are not impaired. These components may also be added to a synthetic resin at the time of adding the flame retardant composition of the second invention to the synthetic resin.

Further, as in the flame retardant composition of the first invention, if necessary, the second invention may include additives generally used for synthetic resins as long as the effects of the invention are not impaired. Useful additives include cross-linking agents, antistatic agents, metal soaps, fillers, antifogging agents, anti-plate-out agents, surface-treating agents, fluorescers, fungicides, bactericides, foaming agents, metal deactivators, mold-release agents, pigments, and processing aids other than the aforementioned acrylic processing aids. These components may also be added to a synthetic resin at the time of adding the flame retardant composition of the invention to the synthetic resin.

The flame retardant composition of the second invention can be obtained simply by mixing components (A), (B), and (E), which are essential components, and component (F) and/or component (G), which may be added as necessary, together with other optional components as necessary. For mixing, any one of various types of mixers can be used. Heating can be performed while mixing. Examples of usable mixers include tumbler mixers, Henschel mixers, ribbon blenders, V-type mixers, W-type mixers, super mixers, and Nauta mixers.

The aforementioned flame retardant compositions of the first and second inventions are effective for flame-proofing of synthetic resins, and are preferably blended with a synthetic resin to provide a flame-retardant synthetic resin composition (referred to also as "flame-retardant synthetic resin composition of the third invention").

Next, the third and fourth inventions will be described. The explanation given in the first and second inventions also applies as appropriate to features that are not particularly explained for the third and fourth inventions.

The third invention relates to a flame-retardant synthetic resin composition and is a synthetic resin composition in which a synthetic resin has been flame-proofed by the flame retardant composition of the first or second invention. The fourth invention provides a molded article obtained by molding the flame-retardant synthetic resin composition of the third invention. The definition of "flame retardancy" in the third invention is the same as in the first and second inventions.

In the flame-retardant synthetic resin composition of the third invention, concrete examples of synthetic resins that are flame-proofed by the flame retardant composition of the first or second invention include thermoplastic resins, and blends thereof, such as: polyolefins and olefin copolymers, e.g., α-olefin polymers, such as polypropylene, high-density polyethylene, low-density polyethylene, linear low-density polyethylene, cross-linked polyethylene, ultra-high-molecular-weight polyethylene, polybutene-1, and poly-3-methylpentene, and ethylene-vinyl acetate copolymer, ethylene-ethyl acrylate copolymer, and ethylene-propylene copolymer; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymer, vinyl chloride-ethylene copolymer, vinyl chloride-vinylidene chloride copolymer, vinyl chloride-vinylidene chloride-vinyl acetate terpolymer, vinyl chloride-acrylic ester copolymer, vinyl chloride-maleic ester copolymer, and vinyl chloride-cyclohexyl maleimide copolymer; petroleum resin; coumarone resin; polystyrene; polyvinyl acetate; acrylic resin; polymethyl methacrylate; polyvinyl alcohol; polyvinyl formal; polyvinyl butyral;, aromatic polyesters including polyalkylene terephthalates such as polyethylene terephthalate, polybutylene terephthalate, and polycyclohexane dimethylene terephthalate, and polyalkylene naphthalates such as polyethylene naphthalate and polybutylene naphthalate, and linear polyesters such as polytetramethylene terephthalate; degradable aliphatic polyesters, such as polyhydroxybutyrate, polycaprolactone, polybutylene succinate, polyethylene succinate, polylactic resin, polymalic acid, polyglycolic acid, polydioxane, and poly(2-oxetanone); polyphenylene oxide; polyamides such as polycaprolactam and polyhexamethylene adipamide; polycarbonate; branched polycarbonate; polyacetal; polyphenylene sulfide; polyurethane; and cellulose-based resin. Other examples include: thermosetting resins, such as phenolic resin, urea resin, melamine resin, epoxy resin, and unsaturated polyester resin; fluororesin; silicone resin; silicone rubber polyether sulfone; polysulfone; polyphenylene ether; polyether ketone; polyether ether ketone; and liquid crystal polymers. Further, other examples include isoprene rubber, butadiene rubber, acrylonitrile-butadiene copolymer rubber, styrene-butadiene copolymer rubber, fluorine rubber, and silicone rubber.

Concrete examples of synthetic resins to be flame-proofed further include: olefin thermoplastic elastomers, styrene thermoplastic elastomers, polyester thermoplastic elastomers, nitrile thermoplastic elastomers, nylon thermoplastic elastomers, vinyl chloride thermoplastic elastomers, polyamide thermoplastic elastomers, and polyurethane thermoplastic elastomers.

These synthetic resins may be used either individually or in combination of two or more thereof. They may be used in the form of polymer alloy.

These synthetic resin may be used in the third invention, regardless of molecular weight, degree of polymerization, density, softening point, solvent-insoluble content, the degree of stereoregularity, presence/absence of catalyst residue, types and content ratio of starting material monomers, and types of polymerization catalysts (e.g., Ziegler catalyst, metallocene catalyst, etc.). Among the aforementioned synthetic resins, polyolefin resins are preferable because excellent flame retardancy can be imparted thereto.

Examples of polyolefin resins include: α-olefin polymers, such as polyethylene, low-density polyethylene, linear low-density polyethylene, high-density polyethylene, polypropylene, homopolypropylene, random copolymer polypropylene, block copolymer polypropylene, impact copolymer polypropylene, high-impact copolymer polypropylene, isotactic polypropylene, syndiotactic polypropylene, hemiisotactic polypropylene, maleic anhydride-modified polypropylene, polybutene, cycloolefin polymer, stereoblock polypropylene, poly-3-methyl-1-butene, poly-3-methyl-1-pentene, and poly-4-methyl-1-pentene; and α-olefin copolymers, such as ethylene/propylene block or random copolymer, ethylene-methyl methacrylate copolymer, and ethylene-vinyl acetate copolymer.

In the flame-retardant synthetic resin composition of the third invention, the content of the synthetic resin is preferably 40 mass% or greater and less than 90 mass%, more preferably 50 mass% or greater and less than 80 mass%, even more preferably 55 mass% or greater and less than 75 mass%. In view of flame retardancy, the content of the flame retardant composition of the first or second invention is preferably 10 mass% or greater and less than 60 mass%, more preferably 20 mass% or greater and less than 50 mass%, even more preferably 25 mass% or greater and less than 45 mass%. In the case where the content of the synthetic resin is 90 mass% or greater or where the content of the flame retardant composition of the first or second invention is less than 10 mass%, there is a possibility that sufficient flame retardancy cannot be exhibited. In the case where the content of the synthetic resin is less than 40 mass% or where the content of the flame retardant composition of the first or second invention is 60 mass% or greater, the intrinsic physical properties of resin may be impaired.

The flame-retardant synthetic resin composition of the third invention can be molded to obtain a molded article ("molded article" of the fourth invention) having excellent flame retardancy. There is no particular limitation to the methods for molding, and examples thereof include extrusion, calendering, injection molding, rolling, compression molding, and blow molding. Molded articles of various shapes can be manufactured, such as resin plates, sheets, films, and odd-form components.

The flame-retardant synthetic resin composition of the third invention can be used, for example, for housings (frames, casings, covers, exterior materials) and components of electric vehicles, machines, electrical/electronic equipment, and office-automation equipment, and for automotive interior/exterior materials, and can be used in applications requiring to meet the UL-94V standard, preferably the UL94 5VA standard.

The flame-retardant synthetic resin composition of the third invention and the molded article of the fourth invention obtained by molding the resin composition can be used in a wide variety of industries, such as electricity, electronics, telecommunications, agriculture, forestry, fisheries, mining, construction, foods, textiles, clothing, medical products/services, coal, oil, rubber, leather, automobiles, precision instruments, lumber, construction materials, civil engineering, furniture, printing, and musical instruments. More specifically, the invention can be used housings (frames, casings, covers, exterior materials) and components of: office supplies and office-automation equipment such as printers, personal computers, word processors, keyboards, PDAs (or compact information terminals), telephones, copying machines, facsimile machines, ECRs (electronic cash registers), calculators, electronic organizers, cards, holders, and stationery; home electrical appliances such as washing machines, refrigerators, vacuum cleaners, microwave ovens, lighting fixtures, game devices, irons, and foot warmers; audio-visual equipment such as TVs, videocassette recorders, video cameras, radio-cassette recorders, tape recorders, mini discs, CD players, loudspeakers, and liquid crystal displays; electrical/electronic components and telecommunications equipment such as connectors, relays, capacitors, switches, printed-circuit boards, coil bobbins, sealing materials for semiconductors, sealing materials for LEDs, electrical wires, cables, transformers, deflection yokes, distribution switchboards, and clocks; office-automation equipment; and automotive interior/exterior materials.

The flame-retardant synthetic resin composition of the third invention and the flame-retardant synthetic resin composition and the molded article of the fourth invention obtained by molding the resin composition can be used as materials for automobiles, hybrid cars, electric cars, vehicles, ships, airplanes, architecture, houses, and buildings, such as seats (stuffing, outer cloth, etc.), belts, ceiling cladding, convertible tops, armrests, door trims, rear package trays, carpets, mats, sun visors, wheel covers, mattress covers, airbags, insulators, straps, strap belts, wire coverings, electrical insulators, paint, coating materials, overlay materials, floor materials, corner walls, carpets, wallpapers, wall cladding, exterior cladding, interior cladding, roof materials, deck materials, wall materials, pillar materials, decking, fence materials, framework, molding, windows, door-shape materials, shingles, panel boards, terraces, balconies, acoustical insulation boards, heat-insulating boards, and window materials; civil engineering materials; and everyday commodities and sporting goods, such as clothing, curtains, bed linen, plywood, synthetic fiber boards, rugs, doormats, sheets, buckets, hoses, containers, eyeglasses, bags, cases, goggles, skis, rackets, tents, and musical instruments.

### Examples

The present invention will be described in further detail below by way of Examples. The present invention, however, is not limited by the following Examples. It should be noted that the formulations shown in Tables 1, 2, 5 and 6 are all in terms of parts by mass.

Among the following Examples and Comparative Examples, Examples 1 to 9 and Comparative Examples 1 to 7 relate to the flame retardant composition of the first invention, and Examples 10 to 20 and Comparative Examples 8 to 17 relate to the flame-retardant synthetic resin composition of the third invention employing the flame retardant composition of the first invention.

Examples 21 to 29 and Comparative Examples 18 to 26 relate to the flame retardant composition of the second invention, and Examples 30 to 40 and Comparative Examples 27 to 36 relate to the flame-retardant synthetic resin composition of the third invention employing the flame retardant composition of the second invention.

### Examples 1 to 9 and Comparative Examples 1 to 7

Flame retardant composition powders of Examples 1 to 9 were prepared according to the formulations shown in Table 1 by mixing the components with a Henschel mixer at a rotation speed of 1500 rpm for 20 minutes. Compound No. 1 having the following structure was used as the aliphatic dicarboxylic acid ether ester compound represented by general formula (1), which is component (D).

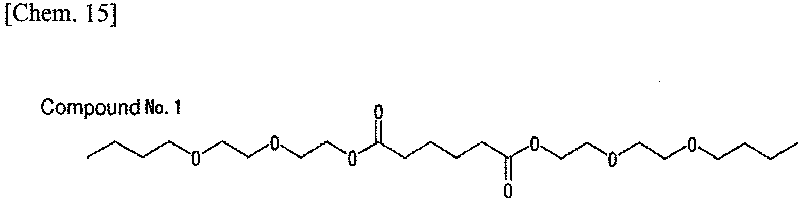

Similarly, flame retardant composition powders of Comparative Examples 1 to 7 were prepared according to the formulations shown in Table 2. There were given Comparative Examples in which a silicone oil was used as a comparative compound to the silane coupling agent of component (C) in Examples, and Comparative Example in which glycerol monostearate was used as a comparative compound to Compound No. 1 of component (D) in Examples.

As for handleability, which is affected by the rise-up of powder, the rise-up of each flame retardant composition powder obtained as above was evaluated according to the dust-rising property test method described below. The results are shown in Tables 1 and 2.

As for the storage stability of each flame retardant composition obtained as above, the occurrence of caking therein was evaluated according to the storage stability test described below. The results are shown in Tables 1 and 2.

### Dust-Rising Property Test Method

The dust-rising property was determined with Multi Tester MT-1001 (trade name), which is a powder property measurement device from Seishin Enterprise Co., Ltd. First, 10 g of the flame retardant composition powder obtained as above was subjected to a free fall from an upper part of a cylinder of the measurement device onto a dish (diameter: 10 cm) located 60 cm below. After the free-fall, the weight of the flame retardant composition powder on the dish was measured, and the measured value of the weight was subtracted from 10 g, to calculate the weight of the flame retardant composition powder having scattered outside the dish.

The smaller the weight of scattered powder, the less the rise-up of powder, e.g., the better the handleability. This measurement was performed three times, and the average value is shown in Tables 1 and 2.

### Storage Stability Test Method

First, the particle-size distribution of the flame retardant composition powder obtained as above was determined with a Microtrac particle-size distribution meter (MT-3000II from Nikkiso Co., Ltd.). Then, 30 g of the flame retardant composition powder was placed in an aluminum bag (13 cm long, 6 cm wide), and the aluminum bag containing the sample was left still for storage in an oven at 50°C for 30 days while applying a pressure of 58 g/cm² onto the aluminum bag. After 30 days, the flame retardant composition powder in the aluminum bag was taken out, and the particle-size distribution thereof was determined with a Microtrac particle-size distribution meter.

The values of the particle diameter at 50% in cumulative distribution (D₅₀) before and after storage in the oven and the increase/decrease in particle diameter are shown in Tables 1 and 2. A larger increase in particle diameter means that caking occurred as a result of the particles sticking together. The smaller the change in particle diameter, the better the storage stability.

### Examples 10 to 20 and Comparative Examples 8 to 17

0.1 parts by mass of calcium stearate (lubricant), 0.1 parts by mass of tetrakis[methyl 3-(3,5-di-tert-butyl-4-hydroxyphenyl)propionate]methane (phenol antioxidant), 0.1 parts by mass of tris(2,4-di-tert-butylphenyl) phosphite (phosphorus antioxidant), and 0.3 parts by mass of glycerol monostearate (lubricant) was blended into 60 parts by mass of polypropylene (melt flow rate: 8 g/10 min) to obtain a polypropylene resin composition. To the obtained polypropylene resin composition, one of the flame retardant compositions obtained according to Examples 1 to 9 was added according to the formulations (mass%) shown in Table 3, to obtain flame-retardant synthetic resin compositions according to Examples 10 to 20. Note that, the flame retardant composition obtained according to Example 1 is designated as Flame retardant composition 1, the flame retardant composition obtained according to Example 2 is designated as Flame retardant composition 2, and the same also applies up to the flame retardant composition obtained according to Example 9 (Flame retardant composition 9).

Likewise, the flame retardant composition obtained according to Comparative Example 1 is designated as Comparative flame retardant composition 1, the flame retardant composition obtained according to Comparative Example 2 is designated as Comparative flame retardant composition 2, and the same also applies up to Comparative flame retardant composition 7. Flame-retardant synthetic resin compositions according to Comparative Examples 8 to 17 was obtained using one of Comparative flame retardant compositions 1 to 7 according to the formulations (mass%) shown in Table 4..

Each of the obtained flame-retardant synthetic resin compositions was extruded at temperatures from 200 to 230°C to produce pellets, and the pellets were used for injection molding at 200°C to obtain a test piece (127 mm long, 12.7 mm wide, 1.6 mm thick). A UL-94V flame retardancy test was performed using each test piece according to the following test method. The results are shown in Tables 3 and 4.

### Method for UL-94V Flame Retardancy Test

The test piece (127 mm long, 12.7 mm wide, 1.6 mm thick) was held vertically. A burner flame was placed in contact with the lower end of the test piece for 10 seconds and then removed, and the time it took for the fire that caught on the test piece to cease was measured. Then, upon cessation of the burning, a burner flame was placed in contact with the test piece for 10 seconds for the second time, and the time it took for the fire that caught on the test piece to cease was measured, like the first time. At the same time, it was observed whether or not flaming particles that dropped from the test piece caused ignition of cotton wool located below the test piece.

From the first and second combustion times and whether or not the cotton wool ignited, each test piece was ranked according to the UL-94V standard. The combustion rank V-0 is the highest rank, and flame retardancy decreases in the order of V-1 to V-2. Note that test pieces that did not fall under any of the ranks V-0 to V-2 are indicated as NR.

**[Table 1]**

| Formulation | | Example | | | | | | | | |
|---|---|---|---|---|---|---|---|---|---|---|
| | | 1 | 2 | 3 | 4 | 5 | 6 | 7 | 8 | 9 |
| Component (A): Melamine pyrophosphate^{*1} | | 40 | 40 | 40 | 40 | 40 | 40 | 40 | 30 | 40 |
| Component (B): Piperazine pyrophosphate ^{*2} | | 60 | 60 | 60 | 60 | 60 | 60 | 60 | 70 | 60 |
| Component (C): Silane coupling agent ^{*3} | | 0.3 | 1.0 | 0.1 | 2.0 | 0.3 | 0.3 | 0.3 | 0.3 | 0.3 |
| Component (D): Compound No. 1 | | 0.2 | 0.2 | 0.2 | 0.2 | 0.1 | 0.3 | 0.5 | 0.2 | 0.2 |
| Component (G): Zinc oxide | | 5 | 5 | 5 | 5 | 5 | 5 | 5 | 5 | |
| Dust-rising property test (g) | | 0.3 | 0.2 | 0.3 | 0.2 | 0.4 | 0.3 | 0.3 | 0.3 | 0.3 |
| Storage stability test | Before storage (µm) | 7 | 7 | 7 | 7 | 7 | 7 | 7 | 7 | 7 |
| | After storage (µm) | 7 | 7 | 11 | 7 | 7 | 7 | 9 | 7 | 7 |
| | Increase/decrease value (µm) | 0 | 0 | 4 | 0 | 0 | 0 | 2 | 0 | 0 |

| | | | | | | | | | | |
|---|---|---|---|---|---|---|---|---|---|---|
| *1: The ratio between pyrophosphoric acid and melamine in melamine pyrophosphate is 1:2 in molar ratio. *2: The ratio between pyrophosphoric acid and piperazine in piperazine pyrophosphate is 1:1 in molar ratio. *3: 2-(3,4-Epoxycyclohexyl)ethyltrimethoxysilane. | | | | | | | | | | |

**[Table 2]**

| Formulation | | Comparative Example | | | | | | |
|---|---|---|---|---|---|---|---|---|
| | | 1 | 2 | 3 | 4 | 5 | 6 | 7 |
| Component (A): Melamine pyrophosphate^{*1} | | 40 | 40 | 40 | 40 | 40 | 40 | 40 |
| Component (B): Piperazine pyrophosphate ^{*2} | | 60 | 60 | 60 | 60 | 60 | 60 | 60 |
| Component (C): Silane coupling agent ^{*3} | | 0.3 | | | | 0.3 | 0.3 | |
| Component (D): Compound No. 1 | | | 0.2 | 0.2 | 0.2 | | | 0.2 |
| Component (G): Zinc oxide | | 5 | 5 | 5 | 5 | 5 | | |
| Silicone oil 1^{*4} | | | | 0.3 | | | | |
| Silicone oil 2^{*5} | | | | | 0.3 | | | |
| Glycerol monostearate | | | | | | 0.2 | | |
| Dust-rising property test (g) | | 4 | 0.3 | 0.3 | 4 | 1.2 | 4 | 0.3 |
| Storage stability test | Before storage (µm) | 7 | 7 | 7 | 7 | 7 | 7 | 7 |
| | After storage (µm) | 7 | 22 | 20 | 7 | 25 | 7 | 22 |
| | Increase/decrease value (µm) | 0 | 15 | 13 | 0 | 18 | 0 | 15 |

| | | | | | | | | |
|---|---|---|---|---|---|---|---|---|
| *1: The ratio between pyrophosphoric acid and melamine in melamine pyrophosphate is 1:2 in molar ratio. *2: The ratio between pyrophosphoric acid and piperazine in piperazine pyrophosphate is 1:1 in molar ratio. *3: 2-(3,4-Epoxycyclohexyl)ethyltrimethoxysilane. *4: Dimethyl silicone oil (KF-96 manufactured by Shin-Etsu Chemical Co., Ltd.) *5: Methyl hydrogen silicone oil (KF-99 manufactured by Shin-Etsu Chemical Co., Ltd.) | | | | | | | | |

**[Table 3]**

| Formulation | Example | | | | | | | | | | |
|---|---|---|---|---|---|---|---|---|---|---|---|
| | 10 | 11 | 12 | 13 | 14 | 15 | 16 | 17 | 18 | 19 | 20 |
| Flame retardant composition 1 obtained according to Example 1 | 26 | 32 | 24 | | | | | | | | |
| Flame retardant composition 2 obtained according to Example 2 | | | | 26 | | | | | | | |
| Flame retardant composition 3 obtained according to Example 3 | | | | | 26 | | | | | | |
| Flame retardant composition 4 obtained according to Example 4 | | | | | | 26 | | | | | |
| Flame retardant composition 5 obtained according to Example 5 | | | | | | | 26 | | | | |
| Flame retardant composition 6 obtained according to Example 6 | | | | | | | | 26 | | | |
| Flame retardant composition 7 obtained according to Example 7 | | | | | | | | | 26 | | |
| Flame retardant composition 8 obtained according to Example 8 | | | | | | | | | | 28 | |
| Flame retardant composition 9 obtained according to Example 9 | | | | | | | | | | | 26 |
| UL-94V flame retardancy test | V-0 | V-0 | V-0 | V-0 | V-0 | V-0 | V-0 | V-0 | V-0 | V-0 | V-0 |

**[Table 4]**

| Formulation | Comparative Example | | | | | | | | | |
|---|---|---|---|---|---|---|---|---|---|---|
| | 8 | 9 | 10 | 11 | 12 | 13 | 14 | 15 | 16 | 17 |
| Comparative flame retardant composition 1 obtained according to Comparative Example 1 | 26 | 32 | 24 | | | | | | | |
| Comparative flame retardant composition 2 obtained according to Comparative Example 2 | | | | 26 | | | | | | |
| Comparative flame retardant composition 3 obtained according to Comparative Example 3 | | | | | 26 | 32 | | | | |
| Comparative flame retardant composition 4 obtained according to Comparative Example 4 | | | | | | | 26 | | | |
| Comparative flame retardant composition 5 obtained according to Comparative Example 5 | | | | | | | | 26 | | |
| Comparative flame retardant composition 6 obtained according to Comparative Example 6 | | | | | | | | | 26 | |
| Comparative flame retardant composition 7 obtained according to Comparative Example 7 | | | | | | | | | | 26 |
| UL-94V flame retardancy test | V-0 | V-0 | V-0 | V-0 | V-2 | V-0 | V-0 | V-0 | V-0 | V-0 |

### Examples 21 to 29 and Comparative Examples 18 to 26

Flame retardant composition powders of Examples 21 to 29 were prepared according to the formulations shown in Table 5 by mixing the components with a Henschel mixer at a rotation speed of 1500 rpm for 20 minutes. Compound No. 23 having the following structure was used as the aliphatic carboxylic acid ester compound represented by general formula (2), which is component (E).

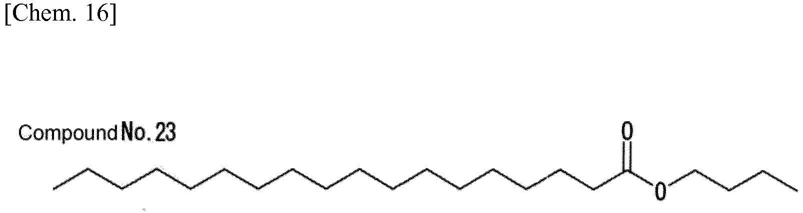

Similarly, flame retardant composition powders of Comparative Examples 18 to 26 were prepared according to the formulations shown in Table 6. There were given Comparative Examples in which glycerol monostearate was used as a comparative compound to the aliphatic carboxylic acid ester compound of component (E) in the Examples.

As for handleability, which is affected by the rise-up of powder, the rise-up of each flame retardant composition powder obtained as above was evaluated according to the dust-rising property test method described below. The results are shown in Tables 5 and 6.

As for evaluate the storage stability of each flame retardant composition obtained as above, the occurrence of caking therein was evaluated according to the storage stability test described below. The results are shown in Tables 5 and 6.

### Dust-Rising Property Test Method

The dust-rising property was determined with Multi Tester MT-1001 (trade name), which is a powder property measurement device from Seishin Enterprise Co., Ltd. First, 10 g of the flame retardant composition powder obtained as above was subjected to a free fall from an upper part of a cylinder of the measurement device onto a dish (diameter: 10 cm) located 60 cm below. After the free-fall, the weight of the flame retardant composition powder on the dish was measured, and the measured value of the weight was subtracted from 10 g, to calculate the weight of the flame retardant composition powder having scattered outside the dish.

The smaller the weight of scattered powder, the less the rise-up of powder, e.g., the better the handleability. This measurement was performed three times, and the average value is shown in Tables 5 and 6.

### Storage Stability Test Method

First, the particle-size distribution of the flame retardant composition powder obtained as above was determined with a Microtrac particle-size distribution meter (MT-3000II from Nikkiso Co., Ltd.). Then, 30 g of the flame retardant composition powder was placed in an aluminum bag (13 cm long, 6 cm wide), and the aluminum bag containing the sample was left still for storage in an oven at 50°C for 30 days while applying a pressure of 58 g/cm² onto the aluminum bag. After 30 days, the flame retardant composition powder in the aluminum bag was taken out, and the particle-size distribution thereof was determined with a Microtrac particle-size distribution meter.

The values of the particle diameter at 50% in cumulative distribution (D₅₀) before and after storage in the oven and the increase/decrease in particle diameter are shown in Tables 5 and 6. A larger increase in particle diameter means that caking occurred as a result of the particles sticking together. The smaller the change in particle diameter, the better the storage stability.

### Examples 30 to 40 and Comparative Examples 27 to 36

0.1 parts by mass of calcium stearate (lubricant), 0.1 parts by mass of tetrakis[methyl 3-(3,5-di-tert-butyl-4-hydroxyphenyl)propionate]methane (phenol antioxidant), 0.1 parts by mass of tris(2,4-di-tert-butylphenyl) phosphite (phosphorus antioxidant), and 0.3 parts by mass of glycerol monostearate (lubricant) was blended into 60 parts by mass of polypropylene (melt flow rate: 8 g/10 min) to obtain a polypropylene resin composition. To the obtained polypropylene resin composition, one of the flame retardant compositions obtained according to Examples 21 to 29 was added according to the formulations (mass%) shown in Table 7, to obtain flame-retardant synthetic resin compositions according to Examples 30 to 40. Note that, the flame retardant composition obtained according to Example 21 is designated as Flame retardant composition 10, the flame retardant composition obtained according to Example 22 is designated as Flame retardant composition 11, and the same also applies up to the flame retardant composition obtained according to Example 29 (Flame retardant composition 18).

Likewise, the flame retardant composition obtained according to Comparative Example 18 is designated as Comparative flame retardant composition 8, the flame retardant composition obtained according to Comparative Example 19 is designated as Comparative flame retardant composition 9, and the same also applies up to Comparative flame retardant composition 16. Flame-retardant synthetic resin compositions according to Comparative Examples 27 to 36 was obtained using one of Comparative flame retardant compositions 8 to 16 according to the formulations (mass%) shown in Table 8.

Each of the obtained flame-retardant synthetic resin compositions was extruded at temperatures from 200 to 230°C to produce pellets, and the pellets were used for injection molding at 200°C to obtain a test piece (127 mm long, 12.7 mm wide, 1.6 mm thick). A UL-94V flame retardancy test was performed using each test piece according to the following test method. The results are shown in Tables 7 and 8.

### Method for UL-94V Flame Retardancy Test

The test piece (127 mm long, 12.7 mm wide, 1.6 mm thick) was held vertically. A burner flame was placed in contact with the lower end of the test piece for 10 seconds and then removed, and the time it took for the fire that caught on the test piece to cease was measured. Then, upon cessation of the burning, a burner flame was placed in contact with the test piece for 10 seconds for the second time, and the time it took for the fire that caught on the test piece to cease was measured, like the first time. At the same time, it was observed whether or not flaming particles that dropped from the test piece caused ignition of cotton wool located below the test piece.

From the first and second combustion times and whether or not the cotton wool ignited, each test piece was ranked according to the UL-94V standard. The combustion rank V-0 is the highest rank, and flame retardancy decreases in the order of V-1 to V-2. Note that test pieces that did not fall under any of the ranks V-0 to V-2 are indicated as NR.

**[Table 5]**

| Formulation | | Example | | | | | | | | |
|---|---|---|---|---|---|---|---|---|---|---|
| | | 21 | 22 | 23 | 24 | 25 | 26 | 27 | 28 | 29 |
| Component (A): Melamine pyrophosphate | | 40 | 40 | 40 | 40 | 40 | 40 | 40 | 40 | 30 |
| Component (B): Piperazine pyrophosphate ^{*2} | | 60 | 60 | 60 | 60 | 60 | 60 | 60 | 60 | 70 |
| Component (E): Compound No. 23 | | 0.3 | 0.1 | 0.2 | 0.5 | 0.3 | 0.2 | 0.3 | 0.3 | 0.3 |
| Component (F): Silicone oil^{*3} | | | | | | 0.3 | 0.3 | | 0.3 | |
| Component (G): Zinc oxide | | | | | | | | 5.0 | 5.0 | |
| Dust-rising property test (g) | | 0.4 | 0.8 | 0.6 | 0.3 | 1.2 | 1.5 | 0.4 | 1.2 | 0.4 |
| Storage stability test | Before storage (µm) | 7 | 7 | 7 | 7 | 7 | 7 | 7 | 7 | 7 |
| | After storage (µm) | 22 | 22 | 22 | 22 | 7 | 7 | 22 | 7 | 22 |
| | Increase/decrease value (µm) | 15 | 15 | 15 | 15 | 0 | 0 | 25 | 0 | 15 |

| | | | | | | | | | | |
|---|---|---|---|---|---|---|---|---|---|---|
| *1: The ratio between pyrophosphoric acid and melamine in melamine pyrophosphate is 1:2 in molar ratio. *2: The ratio between pyrophosphoric acid and piperazine in piperazine pyrophosphate is 1:1 in molar ratio. *3: Methyl hydrogen silicone oil (KF-99 manufactured by Shin-Etsu Chemical Co., Ltd.) | | | | | | | | | | |

**[Table 6]**

| Formulation | | Comparative Example | | | | | | | | |
|---|---|---|---|---|---|---|---|---|---|---|
| | | 18 | 19 | 20 | 21 | 22 | 23 | 24 | 25 | 26 |
| Component (A): Melamine pyrophosphate^{*1} | | 40 | 40 | 40 | 40 | 40 | 40 | 40 | 40 | 40 |
| Component (B): Piperazine pyrophosphate ^{*2} | | 60 | 60 | 60 | 60 | 60 | 60 | 60 | 60 | 60 |
| Component (E): Compound No. 23 | | | | | | | | | | |
| Component (F): Silicone oil^{*3} | | | 0.3 | | 0.3 | | | 0.3 | | 0.3 |
| Component (G): Zinc oxide | | | | 5.0 | 5.0 | | | | 5.0 | 5.0 |
| Glycerol monostearate | | | | | | 0.3 | 0.5 | 0.3 | 0.3 | 0.3 |
| Dust-rising property test (g) | | 1.8 | 4.6 | 1.8 | 4.6 | 1.6 | 1.5 | 4.6 | 1.6 | 4.6 |
| Storage stability test | Before storage (µm) | 7 | 7 | 7 | 7 | 7 | 7 | 7 | 7 | 7 |
| | After storage (µm) | 22 | 7 | 22 | 7 | 26 | 27 | 7 | 26 | 7 |
| | Increase/decrease value (µm) | 15 | 0 | 15 | 0 | 19 | 20 | 0 | 19 | 0 |

| | | | | | | | | | | |
|---|---|---|---|---|---|---|---|---|---|---|
| *1: The ratio between pyrophosphoric acid and melamine in melamine pyrophosphate is 1:2 in molar ratio. *2: The ratio between pyrophosphoric acid and piperazine in piperazine pyrophosphate is 1:1 in molar ratio. *3: Methyl hydrogen silicone oil (KF-99 manufactured by Shin-Etsu Chemical Co., Ltd.) | | | | | | | | | | |

**[Table 7]**

| Formulation | Example | | | | | | | | | | |
|---|---|---|---|---|---|---|---|---|---|---|---|
| | 30 | 31 | 32 | 33 | 34 | 35 | 36 | 37 | 38 | 39 | 40 |
| Flame retardant composition 10 obtained according to Example 21 | 26 | 32 | 24 | | | | | | | | |
| Flame retardant composition 11 obtained according to Example 22 | | | | 26 | | | | | | | |
| Flame retardant composition 12 obtained according to Example 23 | | | | | 26 | | | | | | |
| Flame retardant composition 13 obtained according to Example 24 | | | | | | 26 | | | | | |
| Flame retardant composition 14 obtained according to Example 25 | | | | | | | 26 | | | | |
| Flame retardant composition 15 obtained according to Example 26 | | | | | | | | 26 | | | |
| Flame retardant composition 16 obtained according to Example 27 | | | | | | | | | 26 | | |
| Flame retardant composition 17 obtained according to Example 28 | | | | | | | | | | 26 | |
| Flame retardant composition 18 obtained according to Example 29 | | | | | | | | | | | 28 |
| UL-94V flame retardancy test | V-0 | V-0 | V-0 | V-0 | V-0 | V-0 | V-0 | V-0 | V-0 | V-0 | V-0 |

**[Table 8]**

| Formulation | Comparative Example | | | | | | | | | |
|---|---|---|---|---|---|---|---|---|---|---|
| | 27 | 28 | 29 | 30 | 31 | 32 | 33 | 34 | 35 | 36 |
| Comparative flame retardant composition 8 obtained according to Comparative Example 18 | 26 | 32 | | | | | | | | |
| Comparative flame retardant composition 9 obtained according to Comparative Example 19 | | | 26 | | | | | | | |
| Comparative flame retardant composition 10 obtained according to Comparative Example 20 | | | | 26 | | | | | | |
| Comparative flame retardant composition 11 obtained according to Comparative Example 21 | | | | | 26 | | | | | |
| Comparative flame retardant composition 12 obtained according to Comparative Example 22 | | | | | | 26 | | | | |
| Comparative flame retardant composition 13 obtained according to Comparative Example 23 | | | | | | | 26 | | | |
| Comparative flame retardant composition 14 obtained according to Comparative Example 24 | | | | | | | | 26 | | |
| Comparative flame retardant composition 15 obtained according to Comparative Example 25 | | | | | | | | | 26 | |
| Comparative flame retardant composition 16 obtained according to Comparative Example 26 | | | | | | | | | | 26 |
| UL-94V flame retardancy test | V-0 | V-0 | V-0 | V-0 | V-0 | V-0 | V-0 | V-0 | V-0 | V-0 |

## Claims

1. A flame retardant composition comprising 20 to 50 parts by mass of component (A), 50 to 80 parts by mass of component (B) (with the proviso that the total of component (A) and component (B) is 100 parts by mass), 0.01 to 5.0 parts by mass of component (C), and 0.01 to 1.0 part by mass of component (D):
component (A): at least one melamine salt selected from the group consisting of melamine orthophosphate, melamine pyrophosphate, and melamine polyphosphate;
component (B): at least one piperazine salt selected from the group consisting of piperazine orthophosphate, piperazine pyrophosphate, and piperazine polyphosphate;
component (C): a silane coupling agent; and
component (D): an aliphatic dicarboxylic acid ether ester compound represented by general formula (1) below: 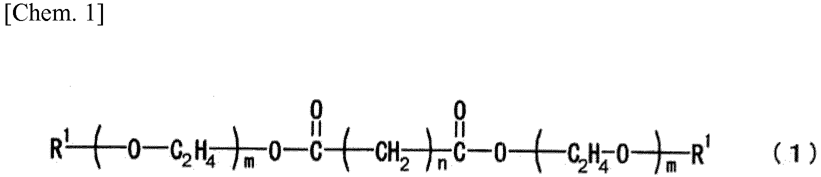
wherein n represents an integer from 2 to 6, m represents an integer from 1 to 3, and R¹ represents a C₁₋₆ alkyl group.

2. The flame retardant composition according to claim 1, wherein component (C) is an epoxy-functional silane coupling agent.

3. A flame retardant composition comprising 20 to 50 parts by mass of component (A), 50 to 80 parts by mass of component (B) (with the proviso that the total of component (A) and component (B) is 100 parts by mass), and 0.01 to 1.0 part by mass of component (E):
component (A): at least one melamine salt selected from the group consisting of melamine orthophosphate, melamine pyrophosphate, and melamine polyphosphate;
component (B): at least one piperazine salt selected from the group consisting of piperazine orthophosphate, piperazine pyrophosphate, and piperazine polyphosphate; and
component (E): an aliphatic carboxylic acid ester compound represented by general formula (2) below: 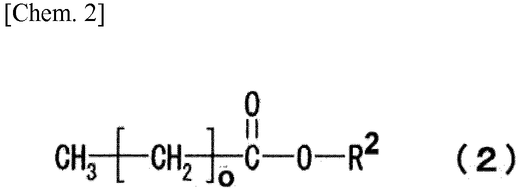 wherein o represents an integer from 10 to 20, and R² represents a C₁₋₈ alkyl group.

4. The flame retardant composition according to claim 3, further comprising 0.01 to 10 parts by mass of a silicone oil as component (F).

5. The flame retardant composition according to any one of claims 1 to 4, further comprising 0.01 to 10 parts by mass of zinc oxide as component (G).

6. A flame-retardant synthetic resin composition comprising: a synthetic resin; and the flame retardant composition according to any one of claims 1 to 5.

7. The flame-retardant synthetic resin composition according to claim 6, wherein the synthetic resin is a polyolefin resin.

8. A molded article obtained from the flame-retardant synthetic resin composition according to claim 6 or 7.

## Patentansprüche

1. Flammhemmende Zusammensetzung, umfassend 20 bis 50 Massenteile der Komponente (A), 50 bis 80 Massenteile der Komponente (B) (mit der Maßgabe, dass die Gesamtmenge der Komponente (A) und der Komponente (B) 100 Masseteile beträgt), 0,01 bis 5,0 Massenteile der Komponente (C) und 0,01 bis 1,0 Massenteile der Komponente (D):
Komponente (A): mindestens ein Melaminsalz, ausgewählt aus der Gruppe bestehend aus Melaminorthophosphat, Melaminpyrophosphat und Melaminpolyphosphat;
Komponente (B): mindestens ein Piperazinsalz, ausgewählt aus der Gruppe bestehend aus Piperazinorthophosphat, Piperazinpyrophosphat und Piperazinpolyphosphat;
Komponente (C): ein Silan-Kopplungsreagenz; und
Komponente (D): eine aliphatische Dicarbonsäureetheresterverbindung der nachstehenden allgemeinen Formel (1): 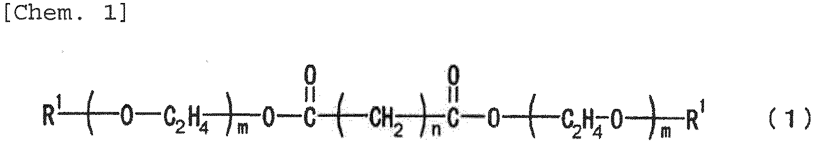
worin n eine ganze Zahl von 2 bis 6 darstellt, m eine ganze Zahl von 1 bis 3 darstellt und R¹ eine C₁₋₆ -Alkylgruppe darstellt.

2. Flammhemmende Zusammensetzung nach Anspruch 1, wobei die Komponente (C) ein Epoxy-funktionelles Silan- Kopplungsreagenz ist.

3. Flammhemmende Zusammensetzung, umfassend 20 bis 50 Massenteile der Komponente (A), 50 bis 80 Massenteile der Komponente (B) (mit der Maßgabe, dass die Gesamtmenge der Komponente (A) und der Komponente (B) 100 Masseteile beträgt) und 0,01 bis 1,0 Masseteile der Komponente (E):
Komponente (A): mindestens ein Melaminsalz, ausgewählt aus der Gruppe bestehend aus Melaminorthophosphat, Melaminpyrophosphat und Melaminpolyphosphat;
Komponente (B): mindestens ein Piperazinsalz, ausgewählt aus der Gruppe bestehend aus Piperazinorthophosphat, Piperazinpyrophosphat und Piperazinpolyphosphat; und
Komponente (E): eine aliphatische Carbonsäureesterverbindung der nachstehenden allgemeinen Formel (2): 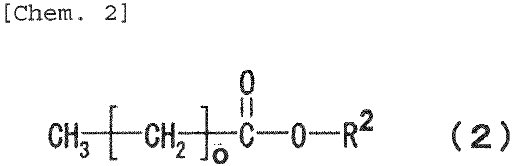 worin o eine ganze Zahl von 10 bis 20 darstellt und R² eine C₁₋₈ -Alkylgruppe darstellt.

4. Flammhemmende Zusammensetzung nach Anspruch 3, weiterhin umfassend 0,01 bis 10 Masseteile eines Silikonöls als Komponente (F).

5. Flammhemmende Zusammensetzung nach einem der Ansprüche 1 bis 4, weiterhin umfassend 0,01 bis 10 Massenteile Zinkoxid als Komponente (G).

6. Flammhemmende Kunstharzzusammensetzung, umfassend: ein Kunstharz; und die flammhemmende Zusammensetzung nach einem der Ansprüche 1 bis 5.

7. Flammhemmende Kunstharzzusammensetzung nach Anspruch 6, wobei das Kunstharz ein Polyolefinharz ist.

8. Formteil, erhalten aus der flammhemmenden Kunstharzzusammensetzung nach Anspruch 6 oder 7.

## Revendications

1. Composition ignifuge comprenant 20 à 50 parties en masse de composant (A), 50 à 80 parties en masse de composant (B) (à condition que la quantité totale de composant (A) et de composant (B) soit de 100 parties en masse), 0,01 à 5,0 parties en masse de composant (C) et 0,01 à 1,0 partie en masse de composant (D):
Composant (A): au moins un sel de mélamine choisi dans le groupe comprenant l'orthophosphate de mélamine, le pyrophosphate de mélamine et le polyphosphate de mélamine;
Composant (B): au moins un sel de pipérazine choisi dans le groupe comprenant l'orthophosphate de pipérazine, le pyrophosphate de pipérazine et le polyphosphate de pipérazine;
Composant (C): un réactif de couplage au silane; et
Composant (D): un composé ester d'éther d'acide dicarboxylique aliphatique représenté par la formule générale suivante (1): 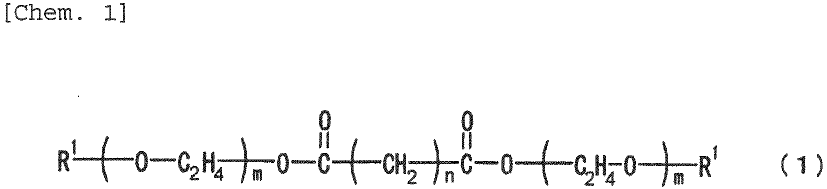
dans laquelle n représente un entier de 2 à 6, m représente un entier de 1 à 3 et R¹ représente un groupe alkyle en C₁₋₆.

2. Composition ignifuge selon la revendication 1, dans laquelle le composant (C) est un réactif de couplage silane à fonction époxy.

3. Composition ignifuge comprenant 20 à 50 parties en masse de composant (A), 50 à 80 parties en masse de composant (B) (à condition que la quantité totale de composant (A) et de composant (B) soit de 100 parties en masse) et 0,01 à 1,0 partie en masse de composant (E):
Composant (A): au moins un sel de mélamine choisi dans le groupe comprenant l'orthophosphate de mélamine, le pyrophosphate de mélamine et le polyphosphate de mélamine;
Composant (B): au moins un sel de pipérazine choisi dans le groupe comprenant l'orthophosphate de pipérazine, le pyrophosphate de pipérazine et le polyphosphate de pipérazine; et
Composant (E): un composé ester d'acide carboxylique aliphatique représenté par la formule générale suivante (2): 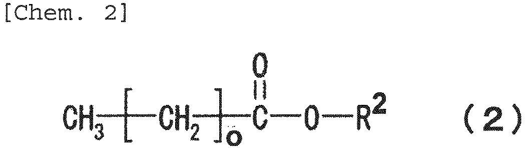
dans laquelle o représente un entier de 10 à 20 et R² représente un groupe alkyle en C₁₋₈.

4. Composition ignifuge selon la revendication 3, comprenant en outre 0,01 à 10 parties en masse d'une huile de silicone en tant que composant (F).

5. Composition ignifuge selon l'une quelconque des revendications 1 à 4, comprenant en outre 0,01 à 10 parties en masse d'oxyde de zinc en tant que composant (G).

6. Composition de résine synthétique ignifuge comprenant: une résine synthétique; et la composition ignifuge selon l'une quelconque des revendications 1 à 5.

7. Composition de résine synthétique ignifuge selon la revendication 6, dans laquelle la résine synthétique est une résine de polyoléfine.

8. Corps moulé obtenu à partir de la composition de résine ignifuge selon la revendication 6 ou 7.
